(19) Europäisches Patentamt
European Patent Office
Office européen des brevets

(11) **EP 2 068 567 A2**

(12) **EUROPEAN PATENT APPLICATION**

(43) Date of publication:
**10.06.2009 Bulletin 2009/24**

(51) Int Cl.:
**H04N 7/26** *(2006.01)*    **H04N 7/50** *(2006.01)*

(21) Application number: **08170095.7**

(22) Date of filing: **27.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.12.2007 KR 20070126377**

(71) Applicant: **Samsung Electronics Co., Ltd.
Suwon-si, Gyeonggi-do 442-743 (KR)**

(72) Inventors:
• **Kim, Dae-hee
c/o Samsung Advanced Institute of Technology
Yongin-si, Gyeonggi-do (KR)**

• **Cho, Dae-sung
c/o Samsung Advanced Institute of Technology
Yongin-si, Gyeonggi-do (KR)**
• **Choi, Woong-il
c/o Samsung Advanced Institute of Technology
Yongin-si, Gyeonggi-do (KR)**
• **Kim, Hyun-mun
c/o Samsung Advanced Institute of Technology
Yongin-si, Gyeonggi-do (KR)**

(74) Representative: **Grünecker, Kinkeldey,
Stockmair & Schwanhäusser
Anwaltssozietät
Leopoldstrasse 4
80802 München (DE)**

(54) **Method, medium, and apparatus encoding/decoding image hierarchically**

(57) A method, medium, and apparatus hierarchically encoding or decoding an image format. In this method, a basic image is generated by down-sampling an original image. A basic layer bitstream is generated by encoding the basic image. A restoration image of the basic image is generated and up-sampled. Enhancement layer bitstreams are generated by encoding a residue image corresponding to a difference between the original image and the up-sampled restoration image by using different quantization parameters.

FIG. 11

EP 2 068 567 A2

**Description**

BACKGROUND

1. Field

One or more embodiments of the present invention relate to a method, medium, and apparatus encoding/ decoding an image format, and more particularly, to a method and apparatus hierarchically encoding/decoding an image format.

2. Description of the Related Art

Codecs, widely used in image processing, are able to reproduce an image format with a bit depth of 8 bits or a 4:2:0 image format. Research is ongoing to discover a new codec capable of reproducing a high-quality image format that has an extended image format of 4:4:4 or 4:2:2 or an extended bit depth of 10 bits. However, terminals installed with existing codecs capable of reproducing an image format with a bit depth of 8 bits or a 4:2:0 image format cannot reproduce an image format with a bit depth of 10 bits, a 4:4:4 image format, or a 4:2:2 image format. Therefore, such terminals will become useless if an image format with a bit depth of 10 bits, a 4:4:4 image format, or a 4:2:2 image format become mainstream. Hence, a technique allowing both terminals installed with existing codecs and terminals installed with a new codec to reproduce a universal stream is greatly demanded.

SUMMARY

One or more embodiments of the present invention provide a method, medium, and apparatus allowing both terminals using an existing codec and terminals using a new codec to reproduce a single stream and to hierarchically encode or decode an image by reflecting the visual characteristics of a human being.

Additional aspects and/or advantages will be set forth in part in the description which follows and, in part, will be apparent from the description, or may be learned by practice of the invention.

To achieve the above and/or other aspects and advantages, embodiments of the present invention include an image encoding method including generating a basic image by down-sampling an original image, generating a basic layer bitstream by encoding the basic image, generating a restoration image of the basic image, up-sampling the restoration image, and generating enhancement layer bitstreams by encoding a residue image corresponding to a difference between the original image and the up-sampled restoration image using different quantization parameters.

To achieve the above and/or other aspects and advantages, embodiments of the present invention include an image encoding apparatus including a down sampler for generating a basic image by down-sampling an original image, a first encoding unit for generating a basic layer bitstream by encoding the basic image, a generation unit for generating a restoration image of the basic image, an up sampler for up-sampling the restoration image, and a second encoding unit for generating enhancement layer bitstreams by encoding a residue image corresponding to a difference between the original image and the up-sampled restoration image using different quantization parameters.

two achieve the above and/or other aspects and advantages, embodiments of the present invention include an image decoding method including generating a restoration image of a basic image by decoding a basic layer bitstream, up-sampling the restoration image, restoring a residue image corresponding to a difference between an original image and the up-sampled restoration image by decoding enhancement layer bitstreams by using different quantization parameters, and generating a restoration image of the original image by adding the restored residue image to the up-sampled restoration image.

To achieve the above and/or other aspects and advantages, embodiments of the present invention include an image decoding apparatus including a first decoding unit for generating a restoration image of a basic image by decoding a basic layer bitstream, an up sampler for up-sampling the restoration image, a second decoding unit for restoring a residue image corresponding to a difference between an original image and the up-sampled restoration image by decoding enhancement layer bitstreams by using different quantization parameters, and an adder for generating a restoration image of the original image by adding the restored residue image to the up-sampled restoration image.

To achieve the above and/or other aspects and advantages, embodiments of the present invention include an image encoding method including generating a basic image by down-sampling an original image, generating a basic layer bitstream by encoding the basic image, generating a restoration image of the basic image, up-sampling the restoration image, generating a prediction image of a residue image corresponding to a difference between the original image and the up-sampled restoration image, and generating enhancement layer bitstreams by encoding a residue image corresponding to a difference between the residue image and the prediction image by using different quantization parameters.

two achieve the above and/or other aspects and advantages, embodiments of the present invention include an image encoding apparatus including a down sampler for generating a basic image by down-sampling an original image, a first encoding unit for generating a basic layer bitstream by encoding the basic image, a first generation unit for generating a restoration image of the basic image, an up sampler for up-sampling the restoration image, a second generation unit for generating a prediction image of a residue image corresponding to a difference between the original image and the up-sampled restoration image, and a second encoding unit for generating enhancement layer bitstreams by encoding a residue image corresponding to a difference between the residue image and the prediction image using different quantization parameters.

To achieve the above and/or other aspects and advantages, embodiments of the present invention include an image decoding method including generating a restoration image of a basic image by decoding a basic layer bitstream, up-sampling the restoration image, generating a prediction image of a residue image corresponding to a difference between an original image and the up-sampled restoration image, restoring a residue image format corresponding to a difference between the residue image and the prediction image by decoding enhancement layer bitstreams by using different quantization parameters, restoring the residue image between the original image and the up-sampled restoration image by adding the restored residue image format to the prediction image, and generating a restoration image of the original image by adding the restored residue image to the up-sampled restoration image.

To achieve the above and/or other aspects and advantages, embodiments of the present invention include an image decoding apparatus including a first decoding unit for generating a restoration image of a basic image by decoding a basic layer bitstream, an up sampler for up-sampling the restoration image, a generation unit for generating a prediction image of a residue image corresponding to a difference between an original image and the up-sampled restoration image, a second decoding unit for restoring a residue image format corresponding to a difference between the residue image and the prediction image by decoding enhancement layer bitstreams by using different quantization parameters, a first adder for restoring the residue image between the original image and the up-sampled restoration image by adding the restored residue image format to the prediction image, and a second adder for generating a restoration image of the original image by adding the restored residue image to the up-sampled restoration image.

To achieve the above and/or other aspects and advantages, embodiments of the present invention include an image encoding method including generating a basic image by down-sampling an original image, generating a basic layer bitstream by encoding the basic image, generating a restoration image of the basic image, up-sampling the restoration image, generating a first prediction image of a first residue image corresponding to a difference between the original image and the up-sampled restoration image, generating a first enhancement layer bitstream by encoding a second residue image corresponding to a difference between the first residue image and the first prediction image by using a first quantization parameter, generating a second prediction image of the first residue image, and generating a second enhancement layer bitstream by encoding a third residue image corresponding to a difference between the first residue image and the second prediction image by using a second quantization parameter.

To achieve the above and/or other aspects and advantages, embodiments of the present invention include an image encoding apparatus including a down sampler for generating a basic image by down-sampling an original image, a first encoding unit for generating a basic layer bitstream by encoding the basic image, a first generation unit for generating a restoration image of the basic image, an up sampler for up-sampling the restoration image, a second generation unit for generating a first prediction image of a first residue image corresponding to a difference between the original image and the up-sampled restoration image, a second encoding unit for generating a first enhancement layer bitstream by encoding a second residue image corresponding to a difference between the first residue image and the first prediction image by using a first quantization parameter, a third generation unit for generating a second prediction image of the first residue image, and a third encoding unit for generating a second enhancement layer bitstream by encoding a third residue image corresponding to a difference between the first residue image and the second prediction image by using a second quantization parameter.

To achieve the above and/or other aspects and advantages, embodiments of the present invention include an image decoding method including generating a restoration image of a basic image by decoding a basic layer bitstream, up-sampling the restoration image, generating a first prediction image of a first residue image corresponding to a difference between an original image and the up-sampled restoration image, restoring a second residue image corresponding to a difference between the first residue image and the first prediction image by decoding a first enhancement layer bitstream by using a first quantization parameter, generating a first restoration image of the first residue image by adding the restored second residue image to the generated first prediction image, generating a second prediction image of the first residue image, restoring a third residue image between the first residue image and the second prediction image by decoding a second enhancement layer bitstream by using a second quantization parameter, generating a second restoration image of the first residue image by adding the restored third residue image to the generated second prediction image, and generating a restoration image of the original image by adding at least one of the first and second restoration image to the up-sampled restoration image.

To achieve the above and/or other aspects and advantages, embodiments of the present invention include an image decoding apparatus including a first decoding unit for generating a restoration image of a basic image by decoding a basic layer bitstream, an up sampler for up-sampling the restoration image, a first generation unit for generating a first prediction image of a first residue image corresponding to a difference between an original image and the up-sampled restoration image, a second decoding unit for restoring a second residue image corresponding to a difference between the first residue image and the first prediction image by decoding a first enhancement layer bitstream by using a first quantization parameter, a first adder for generating a first restoration image of the first residue image by adding the restored second residue image to the generated first prediction image, a second generation unit for generating a second prediction image of the first residue image, a third encoding unit for restoring a third residue image between the first residue image and the second prediction image by decoding a second enhancement layer bitstream by using a second quantization parameter, a second adder for generating a second restoration image of the first residue image by adding the restored third residue image to the generated second prediction image, and a third adder for generating a restoration image of the original image by adding at least one of the first and second restoration image to the up-sampled restoration image.

.Further, according to one or more aspects of the present invention, any combination of the described features, functions, and/or operations may also be provided.

BRIEF DESCRIPTION OF THE DRAWINGS

These and/or other aspects and advantages will become apparent and more readily appreciated from the following description of the embodiments, taken in conjunction with the accompanying drawings of which:

FIG. 1 illustrates a scalable image processing environment, according to embodiments of the present invention;
FIG. 2 illustrates hierarchical encoding or decoding, according to embodiments of the present invention;
FIG. 3 illustrates the format of a scalable bitstream output from a second encoding apparatus, such as a second encoding apparatus illustrated in FIG. 2, according to an embodiment of the present invention;
FIG. 4 is a block diagram of a structure of an image encoding apparatus, according to an embodiment of the present invention;
FIG. 5 illustrates quantization matrixes according to an embodiment of the present invention;
FIG. 6 is a block diagram of a structure of an image decoding apparatus, according to an embodiment of the present invention;
FIG. 7 is a block diagram of a structure of an image encoding apparatus, according to an embodiment of the present invention;
FIG. 8 is a block diagram of a structure of an image decoding apparatus, according to an embodiment of the present invention;
FIG. 9 is a block diagram of a structure of an image encoding apparatus, according to an embodiment of the present invention;
FIG. 10 is a block diagram of a structure of an image decoding apparatus, according to an embodiment of the present invention;
FIG. 11 is a flowchart of an image encoding method, according to an embodiment of the present invention;
FIG. 12 is a flowchart of an image decoding method, according to an embodiment of the present invention;
FIG. 13 is a flowchart of an image encoding method, according to an embodiment of the present invention;
FIG. 14 is a flowchart of an image decoding method, according to an embodiment of the present invention;
FIGS. 15A and 15B are flowcharts illustrating an image encoding method, according to an embodiment of the present invention; and
FIG. 16 is a flowchart of an image decoding method, according to an embodiment of the present invention.

DETAILED DESCRIPTION OF THE EMBODIMENTS

Reference will now be made in detail to embodiments, examples of which are illustrated in the accompanying drawings, wherein like reference numerals refer to the like elements throughout. In this regard, embodiments of the present invention may be embodied in many different forms and should not be construed as being limited to embodiments set forth herein. Accordingly, embodiments are merely described below, by referring to the figures, to explain aspects of the present invention. In particular, it will be understood by those skilled in the art that a term "image" stated hereinafter may be replaced with other terms that have equivalent meanings, such as, a picture, a frame, etc.

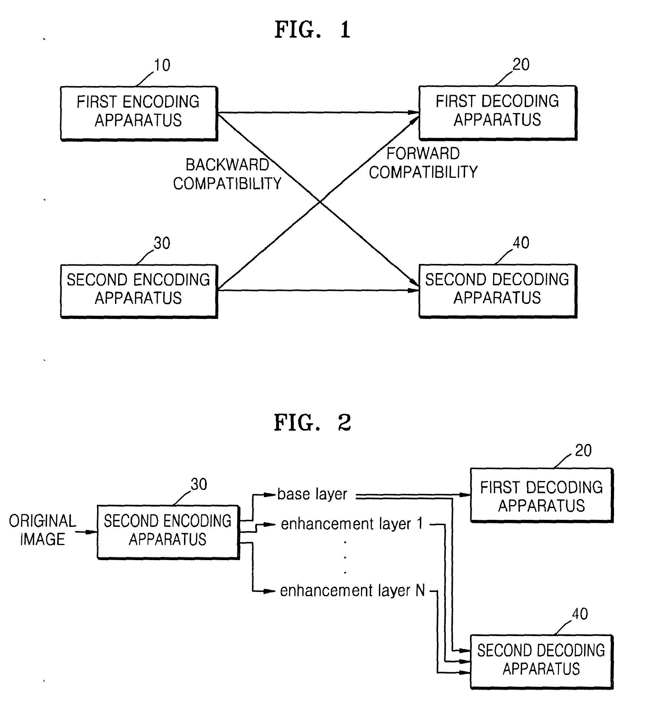

FIG. 1 illustrates a scalable image processing environment, according to embodiments of the present invention. Referring to FIG. 1, the scalable image processing environment may include a first encoding apparatus 10, a first decoding apparatus 20, a second encoding apparatus 30, and a second decoding apparatus 40, for example. The first encoding apparatus 10 and the first decoding apparatus 20 include existing codecs capable of reproducing an image format with a bit depth of 8 bits or a 4:2:0 image format, for example. The second encoding apparatus 30 and the second decoding apparatus 40 include new codecs capable of reproducing an image format with a bit depth of 10 bits, a 4:4:4 image format, or a 4:2:2 image format, also only as examples.

Herein, the term apparatus should be considered synonymous with the term system, and not limited to a single enclosure or all described elements embodied in single respective enclosures in all embodiments, but rather, depending on embodiment, is open to being embodied together or separately in differing enclosures and/or locations through differing elements, e.g., a respective apparatus/system could be a single processing element or implemented though a distributed network, noting that additional and alternative embodiments are equally available.

Accordingly, the first encoding apparatus 10 encodes an image format with a bit depth of 8 bits or a 4:2:0 image format and outputs bitstreams corresponding to the results of the encoding. The second encoding apparatus 30 encodes an image format with a bit depth of 10 bits, a 4:4:4 image format, or a 4:2:2 image format and outputs bitstreams corresponding to the results of the encoding. Compatibility of the first decoding apparatus 20 using an existing codec that can reproduce a bitstream output from the second encoding apparatus 30 using a new codec is referred to as forward compatibility. Compatibility of the second decoding apparatus 40 using a new codec that can reproduce a bitstream output from the first encoding apparatus 10 using an existing codec is referred to as backward compatibility. In particular, embodiments of the present invention that will be described below support the forward compatibility, for example.

FIG. 2 illustrates a hierarchical encoding or decoding method according to embodiments of the present invention. Referring to FIG. 2, when the second encoding apparatus 30 hierarchically encodes an image into N layers, the second encoding apparatus 30 outputs a scalable bitstream that includes a basic layer bitstream, a first enhancement layer bitstream, a second enhancement layer bitstream, etc., through an N-th enhancement layer bitstream. The first decoding apparatus 20 having an existing codec installed therein decodes only the basic layer bitstream of the scalable bitstream. Meanwhile, the second decoding apparatus 40 having a new codec installed therein decodes all of the layer bitstreams included in the scalable bitstream. Of course, apparatuses that decode only some of the N enhancement layer bitstreams may be used as the second decoding apparatus 40.

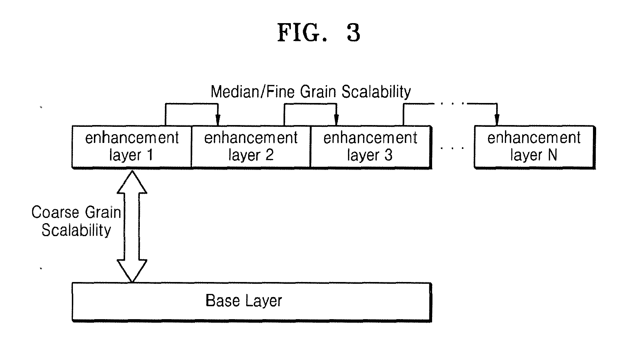

FIG. 3 illustrates a format of a scalable bitstream output from the second encoding apparatus 30 illustrated in FIG. 2, for example. As described above, the scalable bitstream includes the basic layer bitstream, the first enhancement layer bitstream, the second enhancement layer bitstream, etc., through the N-th enhancement layer bitstream. An image format, a bit depth, etc., of a basic layer are different from those of enhancement layers, and thus the image qualities of the base layer and each of the enhancement layers are greatly different. On the other hand, the enhancement layers have an identical image format, an identical bit depth, etc., and thus the image qualities of the enhancement layers are not much different. Accordingly, the scalability between the basic layer and each of the enhancement layers is referred to as coarse grain scalability, and the scalability between the enhancement layers is referred to as median/fine grain scalability. In particular, in embodiments of the present invention to be described hereinafter, quantization parameters are made different according to layers on the basis of the visual characteristics of a human being in order to support the median/fine grain scalability.

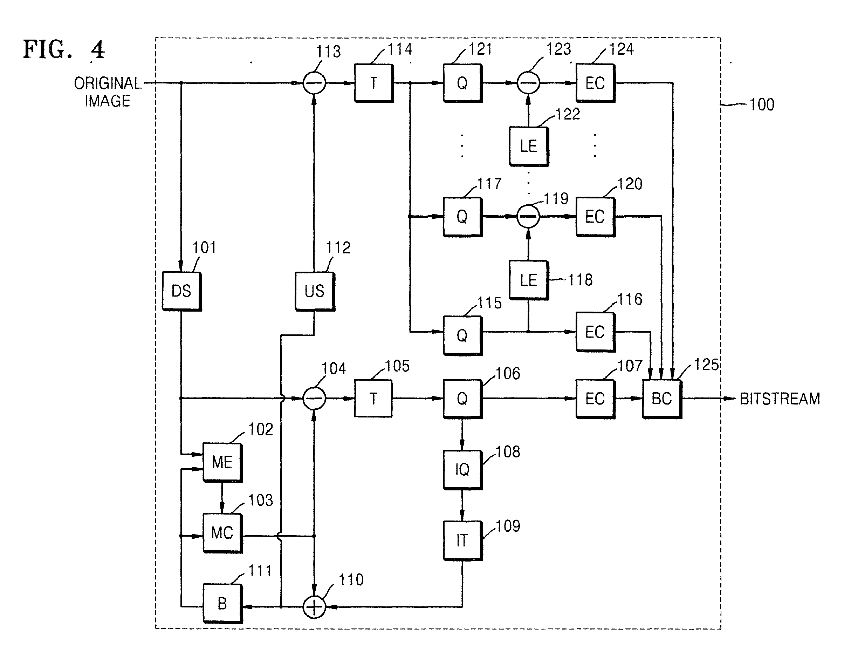

FIG. 4 is a block diagram of a structure of an image encoding apparatus 100, according to an embodiment of the present invention. Referring to FIG. 4, the image encoding apparatus 100 may include a down sampler (DS) 101, a motion estimator (ME) 102, a motion compensator (MC) 103, a first subtractor 104, a first transformer (T) 105, a quantizer (Q) 106, an entropy coder (EC) 107, an inverse quantizer (IQ) 108, an inverse transformer (IT) 109, an adder 110, a buffer 111, an up sampler (US) 112, a second subtractor 113, a second T 114, first through N-th enhancement layer Qs 115, 117, ... , and 121, first through N-th enhancement layer entropy coders (ECs) 116, 120, ... , and 124, first through (N-1)th level estimators (LEs) 118 through 122, first through (N-1)th level subtractors 119 through 123, and a bitstream creator (BC) 125, for example.

The DS 101 down-samples an original image currently input to the image encoding apparatus 100 from among original image formats that make up a moving picture, thereby generating a basic image. If the format of the current original image is 4:4:4 or 4:2:2, the DS 101 down-samples the 4:4:4 original image or the 4:2:2 original image, thereby generating a 4:2:0 basic image. If the definition of the current original image is a high definition (HD) or a common intermediate format (CIF), the DS 101 down-samples the HD original image or the CIF original image, thereby generating a standard definition (SD) basic image or a quarter CIF (QCIF) basic image. If the number of bits representing the color values of pixels that make up the current original image, that is, the bit depth of the current original image, is 10, for example, the DS 101 down-samples the original image having a 10 bit depth, thereby generating a basic image with a 8 bit depth, also as an example. The DS 101 may simultaneously perform at least two of the down-sampling operations corresponding to the above-described cases.

The ME 102 estimates a motion of the basic image generated by the DS 101 on the basis of at least one of reference image formats stored in the buffer 111. More specifically, the ME 102 determines, for blocks constituting the basic image, blocks of a reference image best matched with the basic image from among the reference image formats stored in the buffer 111, and calculates motion vectors representing position differences between the blocks of the reference image and the blocks of the basic image. Herein, in an embodiment, it may be assumed that the size of each block, which is a unit in which an image is processed, is 16x16, which is the most common. Such a 16x16 block is referred to as a macroblock. However, it will be understood by those skilled in the art that each block may have any of various sizes such as 16x8, 8x16, 8x8, and 4x4.

The MC 103 generates a prediction image of the basic image from the at least one of the reference image formats stored in the buffer 111 by using the result of the motion estimation performed on the basic image by the ME 102. More specifically, the MC 103 generates the prediction image of the basic image by determining, as the values of the blocks of the basic image, the values of the blocks of the at least one reference image that are indicated by the motion vectors calculated by the ME 102.

The image compression performed by the ME 102 and the MC 103 is a method of compressing an image by using temporal redundancy between image formats that make up a single moving picture, and is referred to as an inter-encoding method. A method of compressing an image by using spatial redundancy within any one image is referred to as an intra-encoding method. Briefly, the image encoding apparatus 100, according to this embodiment, may be designed so that only the inter-encoding method is applied. However, it will be understood by those skilled in the art that the intra-encoding method may also be applied to the image encoding apparatus 100 according to embodiments of the present invention. The intra-encoding method may be applied to an image input to the image encoding apparatus 100 or to a result of the transformation performed by the first T 105.

The first subtractor 104 subtracts the prediction image generated by the MC 103 from the basic image, thereby generating a residue image corresponding to a difference between the basic image and the prediction image (hereinafter, referred to as a first residue image). More specifically, the first subtractor 104 subtracts, from the blocks of the basic image, the blocks of the prediction image that are indicated by the motion vectors of the blocks of the basic image. The first T 105 generates frequency coefficients of the first residue image by transforming a color domain of the first residue image generated by the first subtractor 104 into a frequency domain. For example, the first T 105 may transform the color domain of the first residue image generated by the first subtractor 104 into the frequency domain by using Discrete Hadamard Transformation (DHT), Discrete Cosine Transformation (DCT), or another transformation algorithm, for example.

The Q 106 generates quantization levels of the first residue image by quantizing the frequency coefficients generated by the first T 105. More specifically, the Q 106 divides the frequency coefficients generated by the first T 105 by a quantization parameter and approximates the results of the divisions to integers. In other words, the approximated integers are referred to as quantization levels. The EC 107 generates a basic layer bitstream by entropy-encoding the quantization levels generated by the Q 106. For example, the EC 107 may entropy-code the quantization levels generated by the Q 106 by using Context-Adaptive Variable-Length Coding (CAVLC), Context-Adaptive Binary Arithmetic Coding (CABAC), or another coding algorithm, for example. The EC 107 also entropy-encodes information for moving picture decoding, for example, index information about a reference image used in inter-prediction, motion vector information, etc., in addition to the integers corresponding to the moving picture. The above-described transformation, quantization, and entropy-encoding may all be equally applied to the following description, and thus only brief descriptions thereof will be made below.

The IQ 108 restores the frequency coefficients of the first residue image by inverse quantizing the quantization levels generated by the Q 106. More specifically, the IQ 108 restores the frequency coefficients of the first residue image by multiplying the integers obtained by the Q 106 by the quantization parameter. The IT 109 restores the first residue image by transforming the frequency domain of the frequency coefficients restored by the IQ 108 into the color domain. The adder 110 generates a restoration image of the basic image by adding the first residue image restored by the IT 109 to the prediction image generated by the MC 103, and stores the restoration image in the buffer 111. A restoration image currently stored in the buffer 111 is used as a reference image for a future image appearing after the basic image or for a past image that appeared prior to the basic image.

The US 112 performs up-sampling on the restoration image generated by the adder 110. For example, when the format of the restoration image generated by the adder 110 is 4:2:0, the US 112 performs up-sampling on the 4:2:0 restoration image so as to generate a 4:4:4 or 4:2:2 image, for example. When the resolution of the restoration image generated by the adder 110 is SD or QCIF, the US 112 performs up-sampling on the SD or QCIF restoration image so as to generate an HD or CIF image, for example. When the bit depth of the restoration image generated by the adder 110 is 8, the US 112 up-samples the restoration image with an 8 bit depth so as to generate an image with a 10 bit depth, again as an example. The US 112 may simultaneously perform at least two of the up-sampling operations corresponding to the above-described cases.

The second subtractor 113 subtracts the restoration image up-sampled by the US 112 from the original image that is currently input to the image encoding apparatus 100 from among the original image formats that make up the moving picture, thereby generating a residue image corresponding to a difference between the original image and the restoration image up-sampled by the US 112 (hereinafter, referred to as a second residue image). More specifically, the second subtractor 113 subtracts, from each of the blocks of the original image, each of the blocks of the restoration image that is located at the same position as the block of the original image. The second T 114 generates frequency coefficients of the second residue image by transforming the second residue image generated by the second subtractor 113 from a color domain to a frequency domain.

The first enhancement layer Q 115 generates first enhancement layer quantization levels of the second residue image by quantizing the frequency coefficients generated by the second transformer 114 by using a first enhancement layer quantization parameter. The first enhancement layer EC 116 generates a first enhancement layer bitstream by entropy-encoding the first enhancement layer quantization levels generated by the first enhancement layer Q 115. The second enhancement layer Q 117 generates second enhancement layer quantization levels of the second residue image by quantizing the frequency coefficients generated by the second transformer 114 by using a second enhancement layer quantization parameter.

The first LE 118 estimates second enhancement layer quantization levels that are to be generated by the second enhancement layer Q 117, from the first enhancement layer quantization levels generated by the first enhancement layer Q 115. More specifically, the first LE 118 restores the frequency coefficients of the second residue image by inverse quantizing the first enhancement layer quantization levels generated by the first enhancement layer Q 115 by using the first enhancement layer quantization parameter, and estimates the second enhancement layer quantization levels to be generated by the second enhancement layer Q 117 by quantizing the frequency coefficients by using the second enhancement layer quantization parameter. In other words, the results of the quantizations performed using the second enhancement layer quantization parameter are estimated values of the second enhancement layer quantization levels.

The first level subtractor 119 subtracts the estimated values of the second enhancement layer quantization levels obtained by the first LE 118 from the second enhancement layer quantization levels generated by the second enhancement layer Q 117, thereby generating differences between the second enhancement layer quantization levels generated by the second enhancement layer Q 117 and the estimated values of the second enhancement layer quantization levels obtained by the first LE 118. The second enhancement layer EC 120 generates a second enhancement layer bitstream by entropy-encoding the differences generated by the first level subtractor 119.

Up to now, matters associated with a first enhancement layer and a second enhancement layer have been described. An (x-1)th enhancement layer and an x-th enhancement layer to which the first and second enhancement layers have been generalized, respectively, may now be described by taking an example of quantization parameters, according to an embodiment of the present invention. For ease of explanation, descriptions of components of the image encoding apparatus 100 which are associated with the (x-1)th and x-th enhancement layers will be omitted to lower the complexity of FIG. 4.

According to an embodiment of the present invention, the first enhancement layer quantization parameter may be defined as a product of a quantization step size of the first enhancement layer and a quantization matrix thereof. In this case, a (x-1)th enhancement layer quantizer divides matrices of the frequency coefficients generated by the second T 114 by the product of the quantization step size and quantization matrix of the (x-1)th enhancement layer, and approximates the results of the divisions to integers, as may be expressed below by Equation 1, for example.

Equation 1:

$$Level_{x-1} = floor \left[ \frac{Coeff_{x-1} + \frac{1}{2}(Q_{Ex-1} \times W_{x-1})}{Q_{Ex-1} \times W_{x-1}} \right]$$

Here, "$Coeff_{x-1}$" denotes matrices of the frequency coefficients generated by the second T 114, "$Q_{Ex-1}$" denotes the quantization step size of the (x-1)th enhancement layer, "$W_{x-1}$" denotes the quantization matrix of the (x-1)th enhancement layer, and "$1/2(Q_{Ex-1} \times W_{x-1})$" denotes a value for rounding off the result of the division of "$Coeff_{x-1}$" by "$Q_{Ex-1} \times W_{x-1}$", "flood[ ]" denotes a function for truncating the numbers below the decimal point of a real number stated in [ ], and "$Level_{x-1}$" denotes (x-1)th enhancement layer quantization levels generated by the (x-1)th enhancement layer quantizer.

A (x-1)th LE restores (x-1)th enhancement layer frequency coefficients of the second residue image by multiplying the (x-1)th enhancement layer quantization levels generated by the (x-1)th enhancement layer quantizer by the product of the quantization step size and quantization matrix of the (x-1)th enhancement layer as may be expressed by the below Equation 2, for example.

### Equation 2:

$$recCoeff_{x-1} = Level_{x-1} \times Q_{Ex-1} \times W_{x-1}$$

Here, "$Level_{x-1}$" denotes the (x-1)th enhancement layer quantization levels generated by the (x-1)th enhancement layer quantizer, "$Q_{Ex-1}$" denotes the quantization step size of the (x-1)th enhancement layer, "$W_{x-1}$" denotes the quantization matrix of the (x-1)th enhancement layer, and "$recCoeff_{x-1}$" denotes the (x-1)th enhancement layer frequency coefficients restored by the (x-1)th LE.

Then, the (x-1)th LE divides the restored (x-1)th enhancement layer frequency coefficients by the product of the quantization step size and quantization matrix of the x-th enhancement layer and approximates the results of the divisions to integers as may be expressed by the below Equation 3, for example.

### Equation 3:

$$estLevel_x = floor\left[\frac{recCoeff_{x-1} + \frac{1}{2}(Q_{Ex} \times W_x)}{Q_{Ex} \times W_x}\right]$$

Here, "$recCoeff_{x-1}$" denotes the (x-1)th enhancement layer frequency coefficients restored by the (x-1)th LE, "$Q_{Ex}$" denotes the quantization step size of the x-th enhancement layer, "$W_x$" denotes the quantization matrix of the x-th enhancement layer, "$1/2(Q_{Ex} \times W_x)$" denotes a value for rounding off a result of a division of "$recCoeff_{x-1}$" by "$Q_{Ex}XW_x$", and "$estLevel_x$" denotes estimation values of x-th enhancement layer quantization levels obtained by the (x-1)th LE.

A (x-1)th level subtractor subtracts the estimation values of the x-th enhancement layer quantization levels obtained by the (x-1)th LE from the x-th enhancement layer quantization levels generated by the x-th enhancement layer quantizer as may be expressed by the below Equation 4, for example.

### Equation 4:

$$recLevel_x = Level_x - estLevel_x$$

Here, "$Level_x$" denotes the x-th enhancement layer quantization levels generated by the x-th enhancement layer quantizer, "estLevel," denotes the estimation values of the x-th enhancement layer quantization levels obtained by the (x-1)th LE, and "$recLevel_x$" denotes differences between the x-th enhancement layer quantization levels generated by the x-th enhancement layer quantizer and the estimation values of the x-th enhancement layer quantization levels obtained by the (x-1)th LE.

Alternatively, the first enhancement layer quantization parameter may be defined as a sum of the quantization step size of the first enhancement layer and the quantization matrix thereof. In this case, the (x-1)th enhancement layer quantizer divides the matrices of the frequency coefficients generated by the second T 114 by the sum of the quantization step size and quantization matrix of the (x-1)th enhancement layer as may be expressed by the below Equation 5, for example, and approximates the results of the division to integers.

Equation 5:

$$Level_{x-1} = floor\left[\frac{Coeff_{x-1} + \frac{1}{2}(Q_{Ex-1} + W_{x-1})}{Q_{Ex-1} + W_{x-1}}\right]$$

Here, "$Coeff_{x-1}$" denotes the matrixes of the frequency coefficients generated by the second transformer 114, "$Q_{Ex-1}$" denotes the quantization step size of the (x-1)th enhancement layer, "$W_{x-1}$" denotes the quantization matrix of the (x-1)th enhancement layer, and "$1/2(Q_{Ex-1} + W_{x-1})$" denotes a value for rounding off the result of the division of "$Coeff_{x-1}$" by "$Q_{Ex-1} + W_{x-1}$", and "$Level_{x-1}$" denotes the (x-1)th enhancement layer quantization levels generated by the (x-1)th enhancement layer quantizer.

The (x-1)th LE restores the frequency coefficients generated by the second transformer 114 by multiplying the (x-1)th enhancement layer quantization levels generated by the (x-1)th enhancement layer quantizer by the sum of the quantization step size and quantization matrix of the (x-1)th enhancement layer as may be expressed by the below Equation 6, for example.

Equation 6:

$$recCoeff_{x-1} = Level_{x-1} \times (Q_{Ex-1} + W_{x-1})$$

Here, "$Level_{x-1}$" denotes the (x-1)th enhancement layer quantization levels generated by the (x-1)th enhancement layer quantizer, "$O_{Ex-1}$" denotes the quantization step size of the (x-1)th enhancement layer, '$W_{x-1}$" denotes the quantization matrix of the (x-1)th enhancement layer, and "$recCoeff_{x-1}$" denotes the (x-1)th enhancement layer frequency coefficients restored by the (x-1)th LE.

The (x-1)th LE divides the restored frequency coefficients by the sum of the quantization step size and quantization matrix of the x-th enhancement layer and approximates the results of the divisions to integers as may be expressed by the below Equation 7, for example.

Equation 7:

$$estLevel_x = floor\left[\frac{recCoeff_{x-1} + \frac{1}{2}(Q_{Ex} + W_x)}{Q_{Ex} + W_x}\right]$$

Here, "$recCoeff_{x-1}$" denotes the (x-1)th enhancement layer frequency coefficients restored by the (x-1)th LE, "$Q_{Ex}$" denotes the quantization step size of the x-th enhancement layer, "$W_x$" denotes the quantization matrix of the x-th enhancement layer, "$1/2(Q_{Ex} + W_x)$" denotes a value for rounding off a result of a division of "$recCoeff_{x-1}$" by "$Q_{Ex} + W_x$", and "$estLevel_x$" denotes estimation values of the x-th enhancement layer quantization levels obtained by the (x-1)th LE.

The (x-1)th level subtractor in the latter case may be the same as the former case where the first enhancement layer quantization parameter is defined as the product of the quantization step size and quantization matrix of the first enhancement layer, and thus a description thereof will be omitted. This hierarchical encoding method will be repeatedly applied up to an N-th enhancement layer which is the uppermost of the enhancement layers. Accordingly, not-described ones of the components illustrated in FIG. 4, for example, the N-th enhancement layer quantizer 121, the N-th enhancement layer EC 124, the (N-1)th LE 122, and the (N-1)th level subtractor 123, will not be further described. However, quantization parameters will be different according to the enhancement layers. In particular, in an embodiment, an image of higher quality should be provided as going from a lower enhancement layer to an upper enhancement layer. Thus, a quantization step size decreases as going from a lower enhancement layer to an upper enhancement layer, and all or some of the values of the elements of a quantization matrix decrease.

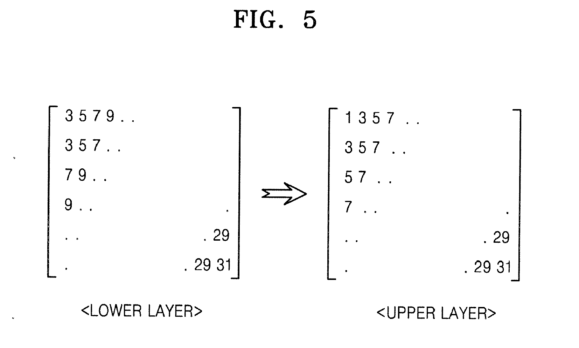

FIG. 5 illustrates quantization matrixes according to an embodiment of the present invention. A left upper part of each of the quantization matrixes of the frequency coefficients generated by the second T 114 corresponds to a low frequency region noticeable to human vision, and a right lower part thereof corresponds to a high frequency region not noticeable to human vision. Referring to FIG. 5, the elements of each of the quantization matrixes have smaller values as going toward the left upper side and greater values as going toward the right lower side. A quantization step size determines a reduction of the entire size of image data, whereas a quantization matrix determines a reduction of the sizes of the frequency coefficients of an image, in which the visual characteristics of a human being are reflected, by arranging elements with smaller values in a low frequency region noticeable to the human vision and arranging elements with greater values in an upper frequency region not noticeable to the human vision.

In particular, the quantization matrixes illustrated in FIG. 5 are designed so that the values of elements on the left upper side decrease as going toward upper layers and the values of elements on the right lower side are the same regardless of the hierarchy of layers. Thus, upper layers provide image formats of qualities perceived more acutely by the vision characteristics of a human being than lower layers provide. It will be understood by those skilled in the art that various types of quantization matrixes other than the quantization matrixes illustrated in FIG. 5 may be easily designed in consideration of the visual characteristics of a human being.

Referring back again to FIG. 4, the BC 125 generates a scalable bitstream by combining the basic layer bitstream generated by the EC 107 with the enhancement layer bitstreams generated by the first through N-th enhancement layer ECs 116 through 124.

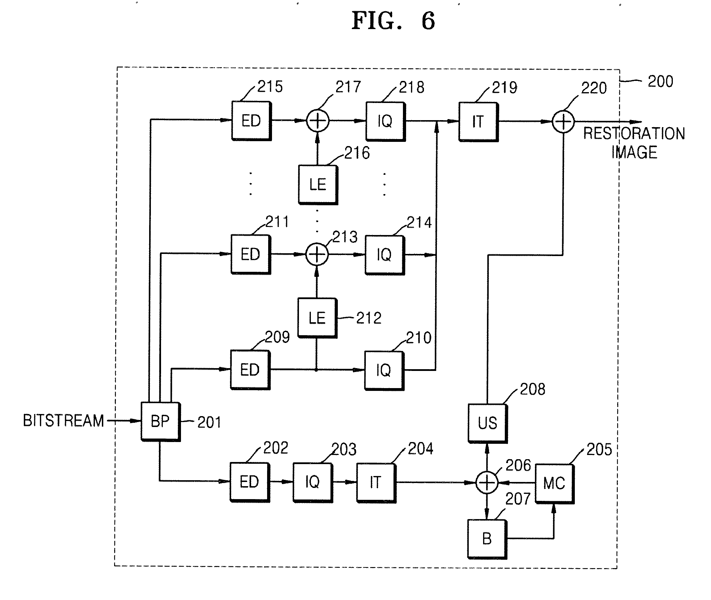

FIG. 6 is a block diagram of a structure of an image decoding apparatus 200, according to an embodiment of the present invention. Referring to FIG. 6, the image decoding apparatus 200 may include a bitstream parser (BP) 201, an entropy decoder (ED) 202, an IQ 203, a first inverse transformer (IT) 204, an MC 205, a first adder 206, a buffer 207, a US 208, a first enhancement layer ED 209, second through N-th enhancement layer EDs 211 through 215, a first enhancement layer IQ 210, second through N-th enhancement layers IQs 214 through 218, first through (N-1)th LEs 212 through 216, first through (N-1)th level adders 213 through 217, a second IT 219, and a second adder 220, for example. An image restoration performed by the image decoding apparatus 200 illustrated in FIG. 6 may be similar to the image restoration performed by the image encoding apparatus 100 illustrated in FIG. 4. Accordingly, although not further described hereinafter, the contents described above in relation to the image encoding apparatus 100 of FIG. 4 may be equally applied to the image decoding apparatus 200 according to an embodiment.

The BP 201 parses the scalable bitstream received from the image encoding apparatus 100, thereby extracting the basic layer bitstream and the enhancement layer bitstreams from the scalable bitstream.

The ED 202 entropy-decodes the basic layer bitstream extracted by the BP 201 so as to restore the quantization levels of the residual image corresponding to the difference between the basic image and the prediction image (hereinafter, referred to as the first residue image), information for image decoding, and other information. The IQ 203 restores the frequency coefficients of the first residue image by inverse quantizing the quantization levels restored by the ED 202. The first IT 204 restores the first residue image by transforming the frequency coefficients restored by the IQ 203 from a frequency domain to a color domain.

The MC 205 generates a prediction image of the basic image from at least one of the reference image formats stored in the buffer 207 by using motion estimation performed on the basic image on the basis of the at least reference image. More specifically, the MC 205 generates the prediction image of the basic image by determining, as the values of the blocks of the basic image, the values of the blocks of the at least one reference image that are indicated by the motion vectors of the blocks of the basic image from among the information for image decoding restored by the ED 202. The first adder 206 generates a restoration image of the basic image by adding the first residue image restored by the first IT 204 to the prediction image generated by the MC 205 and stores the restoration image in the buffer 207.

The US 208 up-samples the restoration image generated by the adder 206. The first enhancement layer ED 209 restores the first enhancement layer quantization levels of the residue image corresponding to the difference between the original image and the restoration image up-sampled by the US 208 (hereinafter, referred to as a second residue image) by entropy-decoding the first enhancement layer bitstream extracted by the BP 201. The first enhancement layer IQ 210 restores the first enhancement layer frequency coefficients of the second residue image by inverse quantizing the first enhancement layer quantization levels restored by the first enhancement layer ED 209 by using a first enhancement layer quantization parameter. The second enhancement layer ED 211 restores the differences between the second enhancement layer quantization levels of the second residue image and the estimation values of the second enhancement layer quantization levels by entropy-decoding the second enhancement layer bitstream extracted by the BP 201.

The first LE 212 estimates the second enhancement layer quantization levels from the first enhancement layer quantization levels restored by the first enhancement layer ED 209. More specifically, the first LE 212 restores the first enhancement layer frequency coefficients of the second residue image by inverse quantizing the first enhancement layer quantization levels restored by the first enhancement layer ED 209 by using the first enhancement layer quantization parameter, and estimates the second enhancement layer quantization levels by quantizing the first enhancement layer frequency coefficients by using the second enhancement layer quantization parameter. In other words, the results of the quantizations performed using the second enhancement layer quantization parameter are the estimation values of the second enhancement layer quantization levels.

The first level adder 213 restores the second enhancement layer quantization levels of the second residue image by adding the differences restored by the second enhancement layer ED 211 to the estimation values of the second enhancement layer quantization levels obtained by the first LE 212. The second enhancement layer IQ 214 restores the second enhancement layer frequency coefficients of the second residue image by inverse quantizing the second enhancement layer quantization levels restored by the first level adder 213 by using the second enhancement layer quantization parameter.

Up to now, matters associated with the first enhancement layer and the second enhancement layer have been described. A (x-1)th enhancement layer and a x-th enhancement layer to which the first and second enhancement layers have been generalized, respectively, may now be described by taking an example of quantization parameters, according to an embodiment. Further descriptions of components of the image decoding apparatus 200 which are associated with the (x-1)th and x-th enhancement layers will be omitted to lower the complexity of FIG. 6.

According to an embodiment, the first enhancement layer quantization parameters may be defined as a product of a quantization step size of the first enhancement layer and a quantization matrix thereof. In this case, the (x-1)th LE restores the second enhancement layer frequency coefficients of the second residue image by multiplying the (x-1)th enhancement layer quantization levels restored by a (x-1)th enhancement layer EC by the product of the quantization step size and quantization matrix of the (x-1)th enhancement layer according to the above-described Equation 2, for example. Then, the (x-1)th LE divides the restored second enhancement layer frequency coefficients by the product of the quantization step size and quantization matrix of the x-th enhancement layer as may be expressed by the above-described Equation 3, for example, and approximates the results of the divisions to integers.

A (x-1)th level adder restores the x-th enhancement layer quantization levels of the second residue image by adding difference values restored by a x-th enhancement layer EC to estimation values of the x-th enhancement layer quantization levels obtained by the (x-1)th LE, as may be expressed by the below Equation 8, for example.

Equation 8:

$$recLevel_x = estLevel_x + resLevel_x$$

Here, "$estLevel_x$" denotes the estimation values of the x-th enhancement layer quantization levels obtained by the (x-1)th LE, "$resLevel_x$" denotes differences between the x-th enhancement layer quantization levels of the second residue image and the estimation values of the x-th enhancement layer quantization levels, and "$recLevel_x$" denotes the x-th enhancement layer quantization levels restored by the (x-1)th level adder.

An x-th layer IQ restores the x-th enhancement layer frequency coefficients of the second residue image by multiplying the x-th enhancement layer quantization levels restored by the (x-1)th level adder by the product of the quantization step size and quantization matrix of the x-th enhancement layer as may be expressed by the below Equation 9, for example.

Equation 9:

$$recCoeff_x = recLevel_x \times Q_{Ex} \times W_x$$

Here, "$recLevel_x$" denotes the x-th enhancement layer quantization levels restored by the (x-1)th level adder, "$Q_{Ex}$" denotes the quantization step size of the x-th enhancement layer, "Wx" denotes the quantization matrix of the x-th enhancement layer, and "$recCoeff_x$" denotes the x-th enhancement layer frequency coefficients restored by an (x-1)th layer IQ.

Alternatively, the first enhancement layer quantization parameter may be defined as a sum of the quantization step size of the first enhancement layer and the quantization matrix thereof. In this case, the (x-1)th LE restores the (x-1)th enhancement layer frequency coefficients of the second residue image by multiplying the (x-1)th enhancement layer quantization levels restored by the (x-1)th enhancement layer EC by the sum of the quantization step size and quantization matrix of the (x-1)th enhancement layer as may be expressed by the above-described Equation 6, for example. Then, the (x-1)th LE divides the restored (x-1)th enhancement layer frequency coefficients by the sum of the quantization step size and quantization matrix of the x-th enhancement layer and approximates the results of the divisions to integers as may be expressed by the above-described Equation 7, for example.

The (x-1)th level adder in the latter case is the same as the former case where the first enhancement layer quantization parameter is defined as the product of the quantization step size and quantization matrix of the first enhancement layer, and thus a description thereof will be omitted. The x-th layer IQ restores the x-th enhancement layer frequency coefficients of the second residue image by multiplying the x-th enhancement layer quantization levels restored by the (x-1)th level adder by the product of the quantization step size and quantization matrix of the x-th enhancement layer as may be expressed by the below Equation 10, for example.

### Equation 10:

$$recCoeff_x = recLevel_x \times (Q_{Ex} + W_x) \quad (10)$$

Here, "$recLevel_x$" denotes the x-th enhancement layer quantization levels restored by the (x-1)th level adder, "$Q_{Ex}$" denotes the quantization step size of the x-th enhancement layer, "Wx" denotes the quantization matrix of the x-th enhancement layer, and "$recCoeff_x$" denotes the x-th enhancement layer frequency coefficients restored by the (x-1)th layer IQ.

This hierarchical decoding method may be repeatedly applied up to the N-th enhancement layer which is the uppermost of the enhancement layers. Accordingly, components illustrated in FIG. 5, for example, an N-th enhancement layer decoder 215, an N-th enhancement layer IQ 218, an (N-1)th LE 216, and an (N-1)th level adder 217, will not be further described. However, quantization parameters will be different according to the respective enhancement layers. The image decoding apparatus 200 according to an embodiment may be similar to the image encoding apparatus 100 illustrated in FIG. 4 in that a quantization step size decreases as going from a lower enhancement layer to an upper enhancement layer, and all or some of the values of the elements of a quantization matrix decrease. The quantization matrixes illustrated in FIG. 5 are equally applied to an embodiment.

Referring again to FIG. 6, the second IT 219 restores an enhancement layer residue image by transforming the frequency coefficients of the highest enhancement layer from among the enhancement layers whose frequency coefficients correspond to the results of the IQs performed by the first through N-th enhancement layers IQs 210 through 218 from a frequency domain to a color domain. For example, if the highest enhancement layer from among the enhancement layers whose frequency coefficients correspond to the results of the IQs performed by the first through N-th enhancement layers IQs 210 through 218 is a third enhancement layer, the second IT 219 restores the enhancement layer residue image by transforming the frequency coefficients of the third enhancement layer from a frequency domain to a color domain. The following two cases may be representative of the case where the highest enhancement layer from among the enhancement layers whose frequency coefficients correspond to the results of the IQs performed by the first through N-th enhancement layers IQs 210 through 218 is the third enhancement layer.

In the first case, the scalable bitstream received, for example, from an image encoding apparatus 100 illustrated in FIG. 4 may include from the basic layer bitstream to the third enhancement layer bitstream or to a bitstream of a enhancement layer higher than the third enhancement layer, but the N-th enhancement layer IQ 218 may be a third enhancement layer IQ. In the second case, the N-th enhancement layer IQ 218 is an IQ of the third enhancement layer or an enhancement layer higher than the third enhancement layer, but the scalable bitstream received from the image encoding apparatus 100 illustrated in FIG. 4 includes from the basic layer bitstream to the third enhancement layer bitstream.

In these cases, the first enhancement layer frequency coefficients and the second enhancement layer frequency coefficients, which are not subjected to IT performed by the second IT 219 do not need to be restored by the first and second enhancement layer IQs 210 and 214. Accordingly, if the second IT 219 is always supposed to inverse transform the frequency coefficients of the third enhancement layer or an enhancement layer higher than the third enhancement layer, the first and second enhancement layer IQs 210 and 214 may be excluded from the image decoding apparatus 200. In addition, if the second IT 219 is always supposed to inverse transform the frequency coefficients of the N-th enhancement layer which is the highest, the first through (N-1)th enhancement layer IQs may be excluded from the image decoding apparatus 200.

The second adder 220 generates a restoration image of the original image by adding the enhancement layer residue image restored by the second IT 219 to the restoration image up-sampled by the US 208.

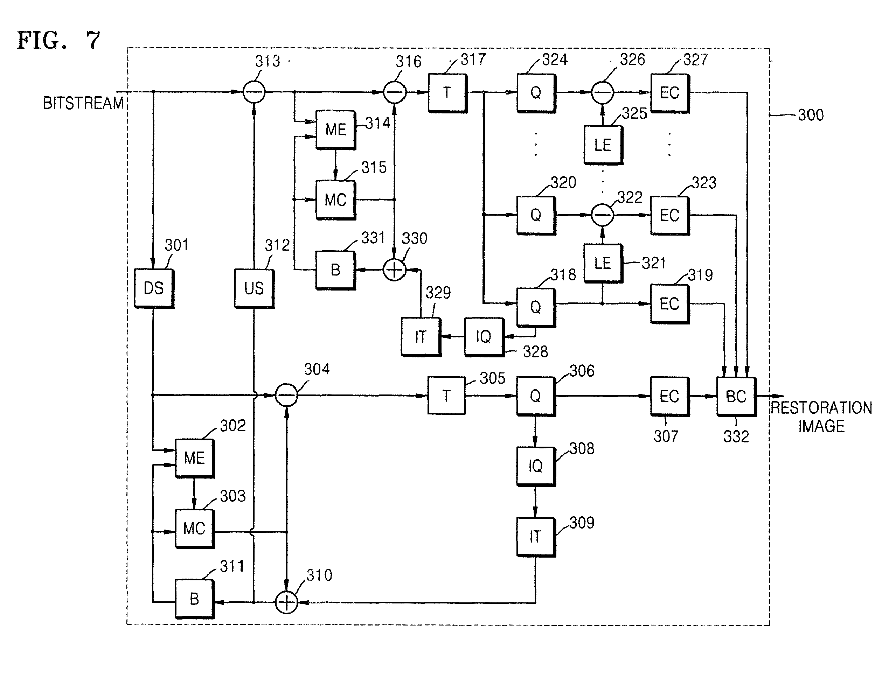

FIG. 7 is a block diagram of a structure of an image encoding apparatus 300, according to an embodiment of the present invention. Referring to FIG. 7, the image encoding apparatus 300 may include a DS 301, a first ME 302, a first MC 303, a first subtractor 304, a first T 305, a Q 306, a EC 307, a first IQ 308, a first IT 309, a first adder 310, a first buffer 311, a US 312, a second subtractor 313, a second ME 314, a second MC 315, a third subtractor 316, a second T 317, a first enhancement layer Q 318, second through N-th enhancement layer Qs 320 through 324, a first enhancement layer EC 319, second through N-th enhancement layer ECs 323 through 327, first through (N-1)th LEs 321 through 325, first through (N-1)th level subtractors 322 through 326, a second IQ 328, a second IT 329, a second adder 330, a second buffer 33i, and a BC 332, for example.

The image encoding apparatus 300 illustrated in FIG. 7 may be similar to the image encoding apparatus 100 illustrated in FIG. 4 except that components associated with inter-coding with respect to the first enhancement layer are further included. Accordingly, although not further described hereinafter, the contents described above in relation to the image encoding apparatus 100 illustrated in FIG. 4 may be applied to the image encoding apparatus 300 according to the an embodiment.

The DS 301 down-samples an original image currently input to the image encoding apparatus 300 from among original image formats that make up a moving picture, thereby generating a basic image. The first ME 302 estimates a motion of the basic image generated by the DS 301 on the basis of at least one of reference image formats stored in the first buffer 311. The first MC 303 generates a prediction image of the basic image from the at least one of the reference image formats stored in the first buffer 311 by using the result of the motion estimation performed on the basic image by the first ME 302.

The first subtractor 304 subtracts the prediction image generated by the first MC 303 from the basic image, thereby generating a residue image corresponding to a difference between the basic image and the prediction image (hereinafter, referred to as a first residue image). The first T 305 generates frequency coefficients of the first residue image by transforming a color domain of the first residue image generated by the first subtractor 304 into a frequency domain. The Q 306 generates quantization levels of the first residue image by quantizing the frequency coefficients generated by the first T 305. The EC 307 generates a basic layer bitstream by entropy-encoding the quantization levels generated by the Q 306.

The first IQ 308 restores the frequency coefficients of the first residue image by inverse quantizing the quantization levels generated by the Q 306. The IT 309 restores the first residue image by transforming the frequency domain of the frequency coefficients restored by the first IQ 308 into the color domain. The first adder 310 generates a restoration image of the basic image by adding the first residue image restored by the IT 309 to the prediction image generated by the first MC 303, and stores the restoration image in the first buffer 311.

The US 312 performs up-sampling on the restoration image generated by the first adder 310. The second subtractor 313 subtracts the restoration image up-sampled by the US 312 from the original image that is currently input to the image encoding apparatus 300 from among the original image formats that make up the moving picture, thereby generating a residue image corresponding to a difference between the original image and the restoration image up-sampled by the US 312 (hereinafter, referred to as a second residue image).

The second ME 314 estimates a motion of the second residue image generated by the second subtractor 313 on the basis of at least one of reference image formats stored in the second buffer 331. The second MC 315 generates a prediction image of the second residue image from the at least one of the reference image formats stored in the second buffer 331 by using the result of the motion estimation performed on the second residue image by the second ME 314. The third subtractor 316 subtracts the prediction image generated by the second MC 315 from the second residue image generated by the second subtractor 313, thereby generating a residue image corresponding to a difference between the second residue image and the prediction image (hereinafter, referred to as a third residue image). More specifically, the third subtractor 316 subtracts, from the blocks of the second residue image, the blocks of the prediction image that are indicated by the motion vectors of the blocks of the second residue image. The second T 317 generates frequency coefficients of the third residue image by transforming a color domain of the third residue image generated by the third subtractor 316 into a frequency domain.

The first enhancement layer Q 318 generates first enhancement layer quantization levels of the third residue image by quantizing the frequency coefficients generated by the second T 317 by using a first enhancement layer quantization parameter. The first enhancement layer EC 319 generates a first enhancement layer bitstream by entropy-encoding the first enhancement layer quantization levels generated by the first enhancement layer Q 318. The second enhancement layer Q 320 generates second enhancement layer quantization levels of the third residue image by quantizing the frequency coefficients generated by the second T 317 by using a second enhancement layer quantization parameter.

The first LE 321 estimates second enhancement layer quantization levels that are to be generated by the second enhancement layer Q 320, from the first enhancement layer quantization levels generated by the first enhancement layer Q 318. The first level subtractor 322 subtracts the estimated values of the second enhancement layer quantization levels obtained by the first LE 321 from the second enhancement layer quantization levels generated by the second enhancement layer Q 320, thereby generating differences between the second enhancement layer quantization levels generated by the second enhancement layer Q 320 and the estimated values of the second enhancement layer quantization levels obtained by the first LE 321. The second enhancement layer EC 323 generates a second enhancement layer bitstream by entropy-encoding the differences generated by the first level subtractor 322.

The second IQ 328 restores the first enhancement layer frequency coefficients of the third residue image by inverse quantizing the first enhancement layer quantization levels generated by the first enhancement layer Q 318. The second IT 329 restores the third residue image by transforming the frequency domain of the first enhancement layer frequency coefficients restored by the second IQ 328 into the color domain. The second adder 330 generates a restoration image of the second residue image by adding the third residue image restored by the second IT 329 to the prediction image generated by the second MC 315, and stores the restoration image in the second buffer 331.

The BC 332 generates a scalable bitstream by combining the basic layer bitstream generated by the EC 307 with the enhancement layer bitstreams generated by the first through N-th enhancement layer ECs 319 through 327.

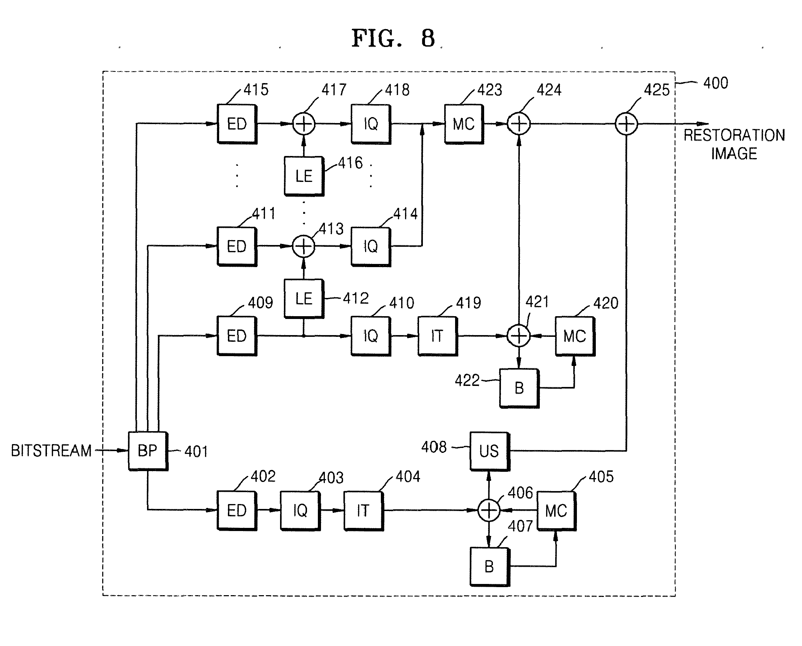

.FIG. 8 is a block diagram of a structure of an image decoding apparatus 400, according to an embodiment of the present invention. Referring to FIG. 8, the image decoding apparatus 400 may include a BP 401, an ED 402, an IQ 403, a first IT 404, a first MC 405, a first adder 406, a first buffer 407, a US 408, a first enhancement layer ED 409, second through N-th enhancement layer EDs 411 through 415, a first enhancement layer IQ 410, second through N-th enhancement layer IQs 414 through 418, first through (N-1)th LEs 412 through 416, first through (N-1)th level adders 413 through 417, a second IT 419, a second MC 420, a third adder 421, a second buffer 422, a second IT 419, a fourth adder 424, and a fifth adder 425, for example.

The image decoding apparatus 400 illustrated in FIG. 8 may be similar to the image decoding apparatus 200 illustrated in FIG. 7 except that components associated with inter-decoding with respect to the first enhancement layer are further included. Accordingly, although not described hereinafter, the contents described above in relation to the image decoding apparatus 200 illustrated in FIG. 6 may be applied to the image decoding apparatus 400 according to an embodiment.

The BP 401 parses the scalable bitstream received, for example, from the image encoding apparatus 300 illustrated in FIG. 6, thereby extracting the basic layer bitstream and the enhancement layer bitstreams from the scalable bitstream. The ED 402 entropy-decodes the basic layer bitstream extracted by the BP 401 so as to restore the quantization levels of the residual image corresponding to the difference between the basic image and the prediction image (hereinafter, referred to as the first residue image), information for image decoding, and other information. The IQ 403 restores the frequency coefficients of the first residue image by inverse quantizing the quantization levels restored by the ED 402. The first IT 404 restores the first residue image by transforming the frequency coefficients restored by the IQ 403 from a frequency domain to a color domain.

The first MC 405 generates a prediction image of the basic image from at least one of the reference image formats stored in the first buffer 407 by using motion estimation performed on the basic image on the basis of the at least reference image. The first adder 406 generates a restoration image of the basic image by adding the first residue image restored by the first IT 404 to the prediction image generated by the first MC 405 and stores the restoration image in the first buffer 407.

The US 408 up-samples the restoration image generated by the first adder 406. The first enhancement layer ED 409 entropy-decodes the first enhancement layer bitstream extracted by the BP 401, thereby restoring the first enhancement layer quantization levels of a residue image corresponding to a difference between a second residue image and the prediction image (hereinafter, referred to as a third residue image). The second residue image is a residue image corresponding to a difference between the original image and the restoration image up-sampled by the US 408. The first enhancement layer IQ 410 restores the first enhancement layer frequency coefficients of the third residue image by inverse quantizing the first enhancement layer quantization levels restored by the first enhancement layer ED 409 by using a first enhancement layer quantization parameter. The second enhancement layer ED 411 restores the differences between the second enhancement layer quantization levels of the third residue image and the estimation values of the second enhancement layer quantization levels by entropy-decoding the second enhancement layer bitstream extracted by the BP 401.

The first LE 412 estimates the second enhancement layer quantization levels from the first enhancement layer quantization levels restored by the first enhancement layer ED 409. More specifically, the first LE 412 restores the first enhancement layer frequency coefficients of the third residue image by inverse quantizing the first enhancement layer quantization levels restored by the first enhancement layer ED 409 by using the first enhancement layer quantization parameter, and estimates the second enhancement layer quantization levels to be restored by the second enhancement layer ED 411 by quantizing the first enhancement layer frequency coefficients by using the second enhancement layer quantization parameter.

The first level adder 413 restores the second enhancement layer quantization levels of the third residue image by adding the differences restored by the second enhancement layer ED 411 to the estimation values of the second enhancement layer quantization levels obtained by the first LE 412. The second enhancement layer IQ 414 restores the second enhancement layer frequency coefficients of the third residue image by inverse quantizing the second enhancement layer quantization levels restored by the first level adder 413 by using the second enhancement layer quantization parameter.

The second IT 419 restores the third residue image by transforming the first enhancement layer frequency coefficients restored by the first enhancement layer IQ 410 from a frequency domain to a color domain. The second MC 420 generates a prediction image of the second residue image from at least one of the reference image formats stored in the second buffer 422 by using motion estimation performed on the second residue image on the basis of the at least reference image. The second adder 421 generates a restoration image of the second residue image by adding the third residue image restored by the second IT 419 to the prediction image generated by the second MC 420 and stores the restoration image in the second buffer 422.

The third IT 423 restores an enhancement layer residue image by transforming the frequency coefficients of the highest enhancement layer from among the enhancement layers whose frequency coefficients correspond to the results of the IQs performed by the second through N-th enhancement layers IQs 414 through 418 from a frequency domain to a color domain. The third adder 424 generates a restoration image of the second residue image with a better quality by adding the enhancement layer residue image restored by the third IT 423 to the restoration image generated by the second adder 421. The fourth adder 425 generates a restoration image of the original image by adding the restoration image generated by the third adder 424 to the restoration image up-sampled by the US 408.

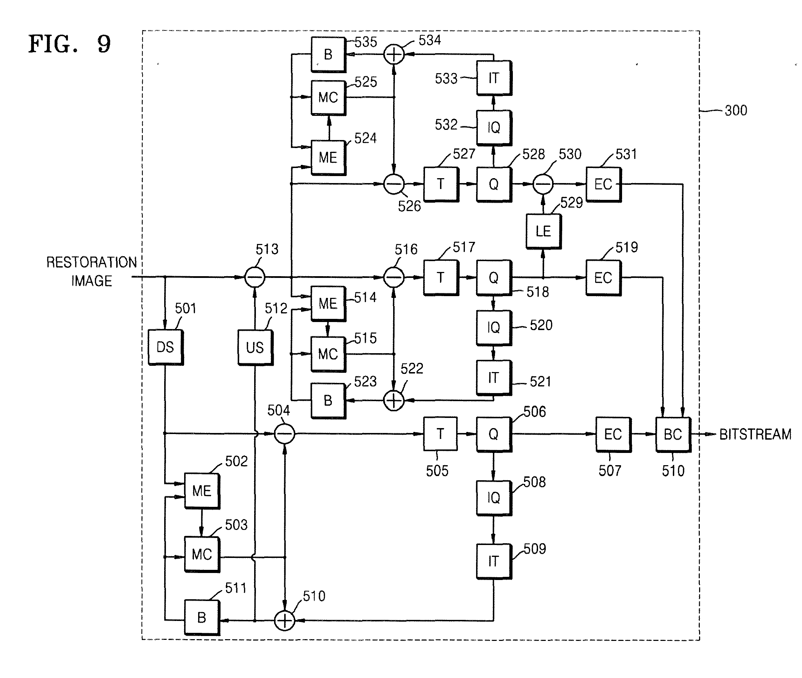

FIG. 9 is a block diagram of a structure of an image encoding apparatus 500, according to an embodiment of the present invention. Referring to FIG. 9, the image encoding apparatus 500 may include a DS 501, a first ME 502, a first MC 503, a first subtractor 504, a first T 505, a Q 506, an EC 507, a first IQ 508, a first IT 509, a first adder 510, a first buffer 511, a US 512, a second subtractor 513, a second ME 514, a second MC 515, a third subtractor 516, a second.T 517, a first enhancement layer Q 518, a first enhancement layer EC 519, a second IQ 520, a second IT 521, a second adder 522, a second buffer 523, a third ME 524, a third MC 525, a fourth subtractor 526, a third T 527, a second enhancement layer Q 528, a first LE 529, a first subtractor 530, a second enhancement layer EC 531, a third IQ 532, a third IT 533, a third adder 534, and a third buffer 535, for example.

The image encoding apparatus 500 illustrated in FIG. 9 may be similar to the image encoding apparatus 300 illustrated in FIG. 7 except that components associated with inter-coding with respect to enhancement layers other than the first enhancement layer are further included. Accordingly, although not further described hereinafter, the contents described above in relation to the image encoding apparatus 300 illustrated in FIG. 7 may be applied to the image encoding apparatus 500 according to an embodiment. In particular, layers higher than the third enhancement layer are not illustrated in order to lower the complexity of FIG. 9. However, the contents to be described hereinafter may be equally applied to the layers higher than the third enhancement layer.

The DS 501 down-samples an original image currently input to the image encoding apparatus 500 from among original image formats that make up a moving picture, thereby generating a basic image. The first ME 502 estimates a motion of the basic image generated by the DS 501 on the basis of at least one of a plurality of reference image formats stored in the first buffer 511. The first MC 503 generates a prediction image of the basic image from the at least one.of the reference image formats stored in the first buffer 511 by using the result of the motion estimation performed on the basic image by the first ME 502.

The first subtractor 504 subtracts the prediction image generated by the first MC 503 from the basic image, thereby generating a residue image corresponding to a difference between the basic image and the prediction image (hereinafter, referred to as a first residue image). The first T 505 generates frequency coefficients of the first residue image by transforming a color domain of the first residue image generated by the first subtractor 504 into a frequency domain. The Q 506 generates quantization levels of the first residue image by quantizing the frequency coefficients generated by the first T 505. The EC 507 generates a basic layer bitstream by entropy-encoding the quantization levels generated by the Q 506.

The first IQ 508 restores the frequency coefficients of the first residue image by inverse quantizing the quantization levels generated by the Q 506. The first IT 509 restores the first residue image by transforming the frequency domain of the frequency coefficients restored by the first IQ 508 into the color domain. The first adder 510 generates a restoration image of the basic image by adding the first residue image restored by the first IT 509 to the prediction image generated by the first MC 503, and stores the restoration image in the first buffer 511.

The US 512 performs up-sampling on the restoration image generated by the first adder 510. The second subtractor 513 subtracts the restoration image up-sampled by the US 512 from the original image that is currently input to the image encoding apparatus 500 from among the original image formats that make up the moving picture, thereby generating a residue image corresponding to a difference between the original image and the restoration image up-sampled by the US 512 (hereinafter, referred to as a second residue image).

The second ME 514 estimates a motion of the second residue image generated by the second subtractor 513 on the basis of at least one of reference image formats stored in the second buffer 523. The second MC 515 generates a prediction image of the second residue image from the at least one of the reference image formats stored in the second buffer 523 by using the result of the motion estimation performed on the basic image by the second ME 514. The third subtractor 516 subtracts the prediction image generated by the second MC 515 from the second residue image generated by the second subtractor 513, thereby generating a residue image corresponding to a difference between the second residue image and the prediction image (hereinafter, referred to as a third residue image). The second T 517 generates frequency coefficients of the third residue image by transforming a color domain of the third residue image generated by the third subtractor 516 into a frequency domain.

The first enhancement layer Q 518 generates first enhancement layer quantization levels of the third residue image by quantizing the frequency coefficients generated by the second T 517 by using a first enhancement layer quantization parameter. The first enhancement layer EC 519 generates a first enhancement layer bitstream by entropy-encoding the first enhancement layer quantization levels generated by the first enhancement layer Q 518.

The second IQ 520 restores the first enhancement layer frequency coefficients of the third residue image by inverse quantizing the first enhancement layer quantization levels generated by the first enhancement layer Q 518. The second IT 521 restores the third residue image by transforming the frequency domain of the first enhancement layer frequency coefficients restored by the second IQ 520 into the color domain. The second adder 522 generates a restoration image of the second residue image by adding the third residue image restored by the second IT 521 to the prediction image generated by the second MC 515, and stores the restoration image in the second buffer 523.

.The third ME 524 estimates a motion of the second residue image generated by the second subtractor 513 on the basis of at least one of reference image formats stored in the third buffer 535. The third MC 525 generates a prediction image of the second residue image from the at least one of the reference image formats stored in the third buffer 535 by using the result of the motion estimation performed on the second residue image by the third ME 524. The fourth subtractor 526 subtracts the prediction image generated by the third MC 525 from the second residue image generated by the second subtractor 513, thereby generating a third residue image. The third T 527 generates frequency coefficients of the third residue image by transforming a color domain of the third residue image generated by the fourth subtractor 526 into a frequency domain.

The second enhancement layer Q 528 generates second enhancement layer quantization levels of the third residue image by quantizing the frequency coefficients generated by the third T 527 by using a second enhancement layer quantization parameter. The first LE 529 estimates second enhancement layer quantization levels that are to be generated by the second enhancement layer Q 528, from the first enhancement layer quantization levels generated by the first enhancement layer Q 518. The first level subtractor 530 subtracts the estimated values of the second enhancement layer quantization levels obtained by the first LE 529 from the second enhancement layer quantization levels generated by the second enhancement layer Q 528, thereby generating differences between the second enhancement layer quantization levels generated by the second enhancement layer Q 528 and the estimation values of the second enhancement layer quantization levels obtained by the first LE 529. The second enhancement layer EC 531 generates a second enhancement layer bitstream by entropy-encoding the differences generated by the first level subtractor 530.

The third IQ 532 restores the second enhancement layer frequency coefficients of the third residue image by inverse quantizing the first enhancement layer quantization levels generated by the second enhancement layer Q 528. The third IT 533 restores the third residue image by transforming the frequency domain of the second enhancement layer frequency coefficients restored by the third IQ 532 into the color domain. The third adder 534 generates a restoration image of the second residue image by adding the third residue image restored by the third IT 533 to the prediction image generated by the third MC 525, and stores the restoration image in the third buffer 535.

The BC 536 generates a scalable bitstream by combining the basic layer bitstream generated by the EC 507 with the enhancement layer bitstreams generated by the first and second enhancement layer ECs 519 and 531.

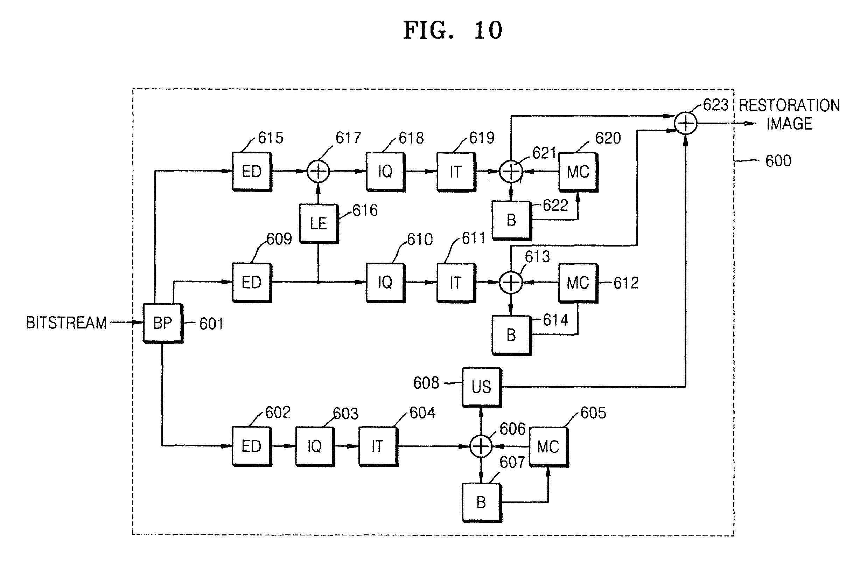

FIG. 10 is a block diagram of a structure of an image decoding apparatus 600 according to an embodiment of the present invention. Referring to FIG. 10, the image decoding apparatus 600 may include a BP 601, an ED 602, an IQ 603, a first IT 604, a first MC 605, a first adder 606, a first buffer 607, a US 608, a first enhancement layer ED 609, a first enhancement layer IQ 610, a second IT 611, a second MC 612, a second adder 613, a second buffer 614, a second enhancement layer ED 615, a first LE 616, a first level adder 617, a second enhancement layer IQ 618, a third IT 619, a second MC 620, a third adder 621, a third buffer 622, and a fourth adder 623, for example.

The image decoding apparatus 600 illustrated in FIG. 10 may be similar to the image decoding apparatus 400 illustrated in FIG. 8 except that components associated with inter-decoding with respect to enhancement layers other than the first enhancement layer are further included. Accordingly, although not further described hereinafter, the contents described above in relation to the image decoding apparatus 400 illustrated in FIG. 8 may be applied to the image decoding apparatus 600 according to an embodiment. In particular, layers higher than the third enhancement layer are not illustrated in order to lower the complexity of FIG. 10. However, the contents to be described hereinafter may be equally applied to the layers higher than the third enhancement layer.

The BP 601 parses the scalable bitstream received, for example, from the image encoding apparatus 500 illustrated in FIG. 9, thereby extracting the basic layer bitstream and the enhancement layer bitstreams from the scalable bitstream. The ED 602 entropy-decodes the basic layer bitstream extracted by the BP 601 so as to restore the quantization levels of the residual image corresponding to the difference between the basic image and the prediction image (hereinafter, referred to as the first residue image), information for image decoding, and other information. The IQ 603 restores the frequency coefficients of the first residue image by inverse quantizing the quantization levels restored by the ED 602. The first IT 604 restores the first residue image by transforming the frequency coefficients restored by the IQ 603 from a frequency domain to a color domain.

The first MC 605 generates a prediction image of the basic image from at least one of the reference image formats stored in the first buffer 607 by using motion estimation performed on the basic image on the basis of the at least reference image. The first adder 606 generates a restoration image of the basic image by adding the first residue image restored by the first IT 604 to the prediction image generated by the first MC 605 and stores the restoration image in the first buffer 607.

The US 608 up-samples the restoration image generated by the first adder 606. The first enhancement layer ED 609 entropy-decodes the first enhancement layer bitstream extracted by the BP 601, thereby restoring the first enhancement layer quantization levels of a residue image corresponding to a difference between a second residue image and the prediction image (hereinafter, referred to as a third residue image). The second residue image is a residue image corresponding to a difference between the original image and the restoration image up-sampled by the US 608. The first enhancement layer IQ 610 restores the first enhancement layer frequency coefficients of the third residue image by inverse quantizing the first enhancement layer quantization levels restored by the first enhancement layer ED 609 by using a first enhancement layer quantization parameter.

The second **IT** 611 restores the third residue image by transforming the first enhancement layer frequency coefficients restored by the first enhancement layer IQ 610 from a frequency domain to a color domain. The second MC 612 generates a prediction image of the second residue image from at least one of the reference image formats stored in the second buffer 614 by using motion estimation performed on the second residue image on the basis of the at least reference image. The second adder 613 generates a restoration image of the second residue image by adding the third residue image restored by the second IT 611 to the prediction image generated by the second MC 612 and stores the restoration image in the second buffer 614.

The second enhancement layer ED 615 restores the differences between the second enhancement layer quantization levels of the third residue image and the estimation values of the second enhancement layer quantization levels by entropy-decoding the second enhancement layer bitstream extracted by the BP 601. The first LE 616 estimates the second enhancement layer quantization levels from the first enhancement layer quantization levels restored by the first enhancement layer ED 609. The first level adder 617 restores the second enhancement layer quantization levels of the third residue image by adding the differences restored by the second enhancement layer ED 615 to the estimation values of the second enhancement layer quantization levels obtained by the first LE 616. The second enhancement layer IQ 618 restores the second enhancement layer frequency coefficients of the third residue image by inverse quantizing the second enhancement layer quantization levels restored by the first level adder 617 by using the second enhancement layer quantization parameter.

.The third IT 619 restores the third residue image by transforming the second enhancement layer frequency coefficients restored by the second enhancement layer IQ 618 from a frequency domain to a color domain. The third MC 620 generates a prediction image of the second residue image from at least one of the reference image formats stored in the second buffer 622 by using motion estimation performed on the second residue image on the basis of the at least one reference image. The third adder 621 generates a restoration image of the second residue image by adding the third residue image restored by the third IT 619 to the prediction image generated by the third MC 620 and stores the restoration image in the second buffer 622.

The fourth adder 623 generates a restoration image of the original image by adding a restoration image of a higher enhancement layer from among the restoration image generated by the second adder 613 and the restoration image generated by the third adder 621, to the restoration image up-sampled by the US 608. That is, the fourth adder 623 adds the restoration image generated by the third adder 621 to the restoration image up-sampled by the US 608.

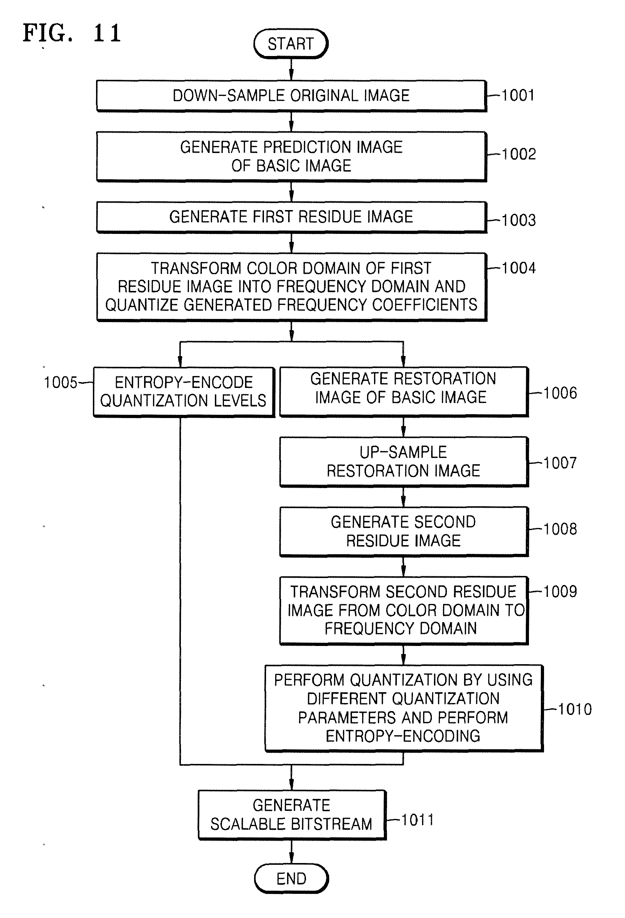

FIG. 11 is a flowchart of an image encoding method, according to an embodiment of the present invention. As only one example, such an embodiment may correspond to example sequential processes performed by the example apparatus 100 illustrated in FIG. 4, but is not limited thereto and alternate embodiments are equally available. Regardless, this embodiment will now be briefly described in conjunction with FIG. 11, with repeated descriptions thereof being omitted. Accordingly, although not further described hereinafter, the contents described above in relation to the image encoding apparatus 100 illustrated in FIG. 4, for example, may be applied to the image encoding method according to an embodiment. In particular, only an operation of processing one of a plurality of original image formats that make up a moving picture is illustrated in order to lower the complexity of FIG. 11. However, the image encoding method illustrated in FIG. 11 is equally applied to each of the other original image formats of the moving picture.

In operation 1001, the image encoding apparatus 100 down-samples an original image currently received from among a set of original image formats that make up a moving picture, thereby generating a basic image. In operation 1002, the image encoding apparatus 100 estimates a motion of the basic image generated by the DS 101 on the basis of at least one of reference image formats stored in the buffer 111 and generates a prediction image of the basic image from the at least one of the reference image formats stored in the buffer 111 by using the result of the motion estimation performed on the basic image.

In operation 1003, the image encoding apparatus 100 subtracts the prediction image generated in operation 1002 from the basic image, thereby generating a residue image corresponding to a difference between the basic image and the prediction image (hereinafter, referred to as a first residue image). In operation 1004, the image encoding apparatus 100 generates frequency coefficients of the first residue image by transforming a color domain of the first residue image generated in operation 1003 into a frequency domain, and generates quantization levels of the first residue image by quantizing the generated frequency coefficients. In operation 1005, the image encoding apparatus 100 generates a basic layer bitstream by entropy-encoding the quantization levels generated in operation 1004.

In operation 1006, the image encoding apparatus 100 restores the frequency coefficients of the first residue image by inverse quantizing the quantization levels generated in operation 1004, restores the first residue image by transforming the frequency domain of the frequency coefficients into the color domain, generates a restoration image of the basic image by adding the restored first residue image to the prediction image generated in operation 1002, and stores the restoration image in the buffer 111.

In operation 1007, the image encoding apparatus 100 performs up-sampling on the restoration image generated in operation 1006. In operation 1008, the image encoding apparatus 100 subtracts the restoration image up-sampled in operation 1007 from the original image that is currently input to the image encoding apparatus 100 from among the original image formats that make up the moving picture, thereby generating a residue image corresponding to a difference between the original image and the restoration image up-sampled in operation 1007 (hereinafter, referred to as a second residue image). In operation 1009, the image encoding apparatus 100 generates frequency coefficients of the second residue image by transforming the second residue image generated in operation 1008 from a color domain to a frequency domain.

In operation 1010, the image encoding apparatus 100 generates first enhancement layer quantization levels of the second residue image by quantizing the frequency coefficients generated in operation 1009 by using a first enhancement layer quantization parameter, and generates a first enhancement layer bitstream by entropy-encoding the first enhancement layer quantization levels. Further, in operation 1010, the image encoding apparatus 100 also generates second enhancement layer quantization levels of the second residue image by quantizing the frequency coefficients generated in operation 1009 by using a second enhancement layer quantization parameter. Still further, in operation 1010, the image encoding apparatus 100 also estimates second enhancement layer quantization levels from the first enhancement layer quantization levels and entropy-encodes differences between the second enhancement layer quantization levels and the estimated values of the second enhancement layer quantization levels, thereby generating a second enhancement layer bitstream. The operation 1010 may be repeated on all of the enhancement layers.

In operation 1011, the image encoding apparatus 100 generates a scalable bitstream by combining the basic layer bitstream generated in operation 1005 with the enhancement layer bitstreams generated in operation 1010.

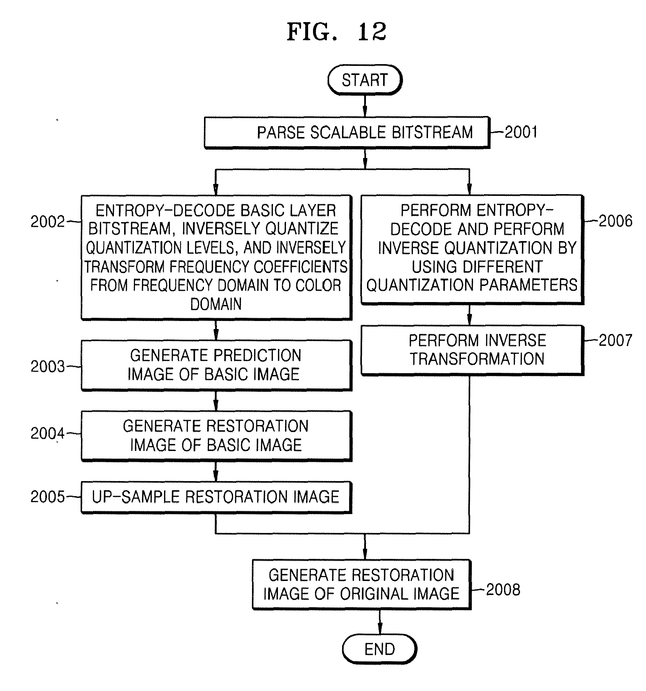

FIG. 12 is a flowchart of an image decoding method according to an embodiment of the present invention. As only one example, such an embodiment may correspond to example sequential processes performed by the example apparatus 200 illustrated in FIG. 6, but is not limited thereto and alternate embodiments are equally available. Regardless, this embodiment will now be briefly described in conjunction with FIG. 12, with repeated descriptions thereof being omitted. Accordingly, although not further described hereinafter, the contents described above in relation to the image decoding apparatus 200 illustrated in FIG. 6, for example, may be applied to the image decoding method according to an embodiment. In particular, only an operation of processing one of the original image formats that make up a moving picture is illustrated in order to lower the complexity of FIG. 12. However, the image decoding method illustrated in FIG. 12 is equally applied to each of the other original image formats of the moving picture.

In operation 2001, the image decoding apparatus 200 parses the scalable bitstream received from the image encoding apparatus 100 illustrated in FIG. 4, thereby extracting the basic layer bitstream and the enhancement layer bitstreams from the scalable bitstream.

In operation 2002, the image decoding apparatus 200 entropy-decodes the basic layer bitstream extracted in operation 2001 so as to restore the quantization levels of the residual image corresponding to the difference between the basic image and the prediction image (hereinafter, referred to as the first residue image), information for image decoding, and other information, restores the frequency coefficients of the first residue image by inverse quantizing the quantization levels, and restores the first residue image by transforming the frequency coefficients from a frequency domain to a color domain.

In operation 2003, the image decoding apparatus 200 generates a prediction image of the basic image from at least one of the reference image formats stored in the buffer 207 by using motion estimation performed on the basic image on the basis of the at least one reference image. In operation 2004, the image decoding apparatus 200 generates a restoration image of the basic image by adding the first residue image restored in operation 2002 to the prediction image generated in operation 2003 and stores the restoration image in the buffer 207. In operation 2005, the image decoding apparatus 200 up-samples the restoration image generated in operation 2004.

In operation 2006, the image decoding apparatus 200 restores the first enhancement layer quantization levels of the residue image corresponding to the difference between the original image and the restoration image up-sampled in operation 2005 (hereinafter, referred to as a second residue image) by entropy-decoding the first enhancement layer bitstream extracted in operation 2001, and restores the first enhancement layer frequency coefficients of the second residue image by inverse quantizing the first enhancement layer quantization levels by using a first enhancement layer quantization parameter.

Further, in operation 2006, the image decoding apparatus 200 also restores the differences between the second enhancement layer quantization levels of the second residue image and the estimation values of the second enhancement layer quantization levels by entropy-decoding the second enhancement layer bitstream extracted in operation 2001, estimates the second enhancement layer quantization levels from the first enhancement layer quantization levels, and restores the second enhancement layer quantization levels of the second residue image by adding the restored differences to the estimation values of the second enhancement layer quantization levels. Still further, in operation 2006, the image decoding apparatus 200 also restores the second enhancement layer frequency coefficients of the second residue image by inverse quantizing the restored second enhancement layer quantization levels by using the second enhancement layer quantization parameter. The operation 2006 may be repeated on all of the enhancement layers.

In operation 2007, the image decoding apparatus 200 restores an enhancement layer residue image by transforming the frequency coefficients of the highest enhancement layer from among the enhancement layers whose frequency coefficients correspond to the results of the IQs performed in operation 2006 from a frequency domain to a color domain. In operation 2008, the image decoding apparatus 200 generates a restoration image of the original image by adding the enhancement layer residue image restored in operation 2007 to the restoration image up-sampled in operation 2005.

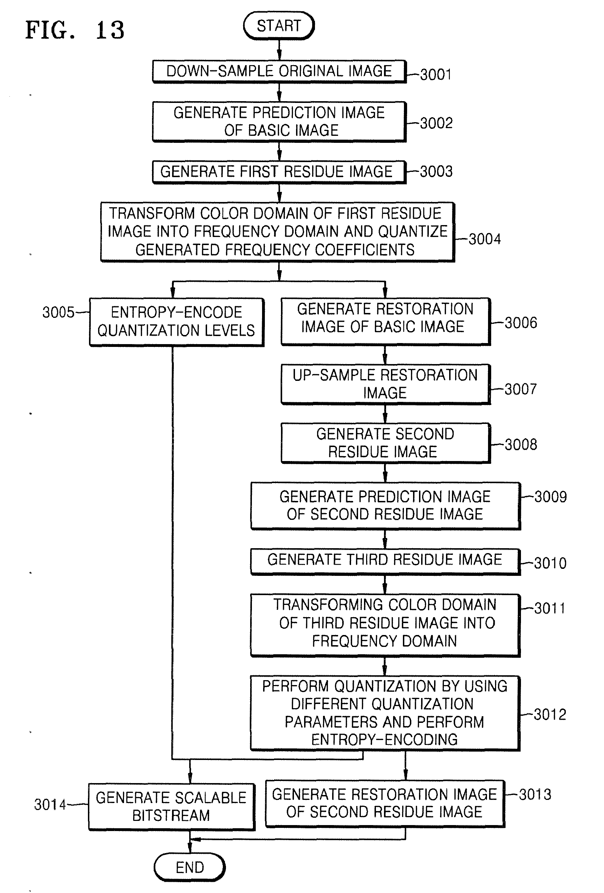

FIG. 13 is a flowchart of an image encoding method according to an embodiment of the present invention. As only one example, such an embodiment may correspond to example sequential processes performed by the example apparatus 300 illustrated in FIG. 7, but is not limited thereto and alternate embodiments are equally available. Regardless, this embodiment will now be briefly described in conjunction with FIG. 13, with repeated descriptions thereof being omitted. Accordingly, although not further described hereinafter, the contents described above in relation to the image encoding apparatus 300 illustrated in FIG. 7, for example, may be applied to the image encoding method according to an embodiment. In particular, only an operation of processing one of the original image formats that make up a moving picture is illustrated in order to lower the complexity of FIG. 13. However, the image encoding method illustrated in FIG. 13 is equally applied to each of the other original image formats of the moving picture.

In operation 3001, the image encoding apparatus 300 down-samples an original image currently received from among original image formats that make up a moving picture, thereby generating a basic image. In operation 3002, the image encoding apparatus 300 estimates a motion of the basic image generated by the DS 301 on the basis of at least one of reference image formats stored in the first buffer 311 and generates a prediction image of the basic image from the at least one of the reference image formats stored in the first buffer 311 by using the result of the motion estimation performed on the basic image.

In operation 3003, the image encoding apparatus 300 subtracts the prediction image generated in operation 3002 from the basic image, thereby generating a residue image corresponding to a difference between the basic image and the prediction image (hereinafter, referred to as a first residue image). In operation 3004, the image encoding apparatus 300 generates frequency coefficients of the first residue image by transforming a color domain of the first residue image generated in operation 3003 into a frequency domain, and generates quantization levels of the first residue image by quantizing the generated frequency coefficients. In operation 3005, the image encoding apparatus 300 generates a basic layer bitstream by entropy-encoding the quantization levels generated in operation 3004.

In operation 3006, the image encoding apparatus 300 restores the frequency coefficients of the first residue image by inverse quantizing the quantization levels generated in operation 3004, restores the first residue image by transforming the frequency domain of the frequency coefficients into the color domain, generates a restoration image of the basic image by adding the restored first residue image to the prediction image generated in operation 3002, and stores the restoration image in the first buffer 311.

In operation 3007, the image encoding apparatus 300 performs up-sampling on the restoration image generated in operation 3006. In operation 3008, the image encoding apparatus 300 subtracts the restoration image up-sampled in operation 3007 from the original image that is currently received from among the original image formats that make up the moving picture, thereby generating a residue image corresponding to a difference between the original image and the restoration image up-sampled in operation 3007 (hereinafter, referred to as a second residue image).

In operation 3009, the image encoding apparatus 300 estimates a motion of the second residue image generated in operation 3008 on the basis of at least one of reference image formats stored in the second buffer 331, and generates a prediction image of the second residue image from the at least one of the reference image formats stored in the second buffer 331 by using the result of the motion estimation performed on the second residue image. In operation 3010, the image encoding apparatus 300 subtracts the prediction image generated in operation 3009 from the second residue image generated in operation 3008, thereby generating a residue image corresponding to a difference between the second residue image and the prediction image (hereinafter, referred to as a third residue image). In operation 3011, the image encoding apparatus 300 generates frequency coefficients of the third residue image by transforming a color domain of the third residue image generated in operation 3010 into a frequency domain.

In operation 3012, the image encoding apparatus 300 generates first enhancement layer quantization levels of the third residue image by quantizing the frequency coefficients generated in operation 3011 by using a first enhancement layer quantization parameter, and generates a first enhancement layer bitstream by entropy-encoding the first enhancement layer quantization levels. Further, in operation 3012, the image encoding apparatus 300 also generates second enhancement layer quantization levels of the third residue image by quantizing the frequency coefficients generated in operation 3011 by using a second enhancement layer quantization parameter. Still further, in operation 3012, the image encoding apparatus 300 also estimates second enhancement layer quantization levels from the first enhancement layer quantization levels and entropy-encodes differences between the second enhancement layer quantization levels and the estimated values of the second enhancement layer quantization levels, thereby generating a second enhancement layer bitstream. The operation 3012 is repeated on all of the enhancement layers.

In operation 3013, the image encoding apparatus 300 restores the first enhancement layer frequency coefficients of the third residue image by inverse quantizing the first enhancement layer quantization levels generated in operation 3011, restores the third residue image by transforming the frequency domain of the first enhancement layer frequency coefficients into the color domain, generates a restoration image of the second residue image by adding the restored third residue image to the prediction image generated in operation 3009, and stores the restoration image in the second buffer 331.

In operation 3014, the image encoding apparatus 300 generates a scalable bitstream by combining the basic layer bitstream generated in operation 3005 with the enhancement layer bitstreams generated in operation 3012.

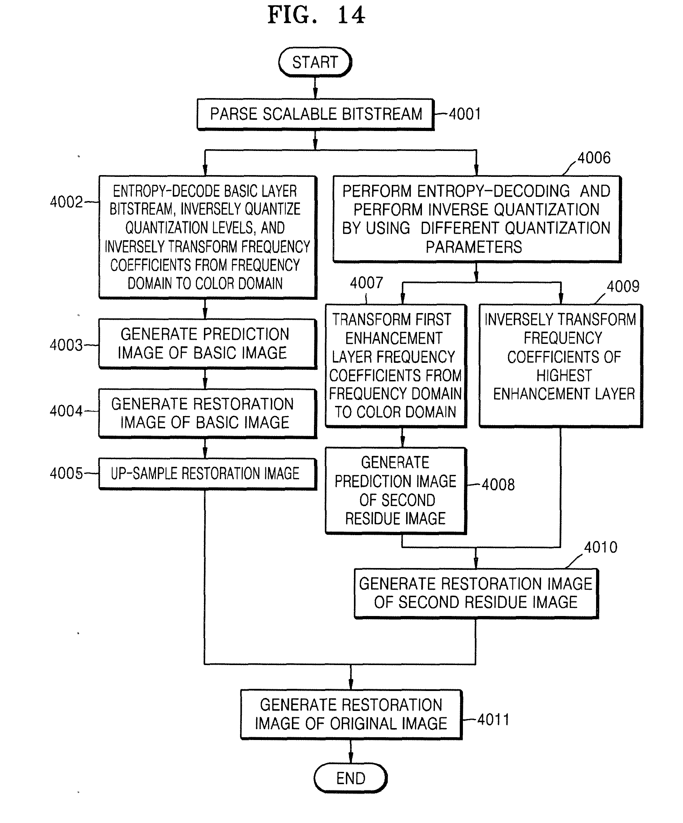

FIG. 14 is a flowchart of an image decoding method according to an embodiment of the present invention. As only one example, such an embodiment may correspond to example sequential processes performed by the example apparatus 400 illustrated in FIG. 8, but is not limited thereto and alternate embodiments are equally available. Regardless, this embodiment will now be briefly described in conjunction with FIG. 14, with repeated descriptions thereof being omitted. Accordingly, although not further described hereinafter, the contents described above in relation to the image decoding apparatus 400 illustrated in FIG. 8 may be applied to the image decoding method according to an embodiment. In particular, only an operation of processing one of the original image formats that make up a moving picture is illustrated in order to lower the complexity of FIG. 14. However, the image decoding method illustrated in FIG. 14 is equally applied to each of the other original image formats of the moving picture.

In operation 4001, the image decoding apparatus 400 parses the scalable bitstream received from the image encoding apparatus 300 illustrated in FIG. 6, thereby extracting the basic layer bitstream and the enhancement layer bitstreams from the scalable bitstream. In operation 4002, the image decoding apparatus 400 entropy-decodes the basic layer bitstream extracted in operation 4001 so as to restore the quantization levels of the residual image corresponding to the difference between the basic image and the prediction image (hereinafter, referred to as the first residue image), information for image decoding, and other information, restores the frequency coefficients of the first residue image by inverse quantizing the quantization levels, and restores the first residue image by transforming the frequency coefficients from a frequency domain to a color domain.

In operation 4003, the image decoding apparatus 400 generates a prediction image of the basic image from at least one of the reference image formats stored in the first buffer 407 by using motion estimation performed on the basic image on the basis of the at least reference image. In operation 4004, the image decoding apparatus 400 generates a restoration image of the basic image by adding the first residue image restored in operation 4002 to the prediction image generated in operation 4003 and stores the restoration image in the first buffer 407. In operation 4005, the image decoding apparatus 400 up-samples the restoration image generated in operation 4004.

In operation 4006, the image decoding apparatus 400 entropy-decodes the first enhancement layer bitstream extracted in operation 4001, thereby restoring the first enhancement layer quantization levels of a residue image corresponding to a difference between a second residue image and the prediction image (hereinafter, referred to as a third residue image). The second residue image is a residue image corresponding to a difference between the original image and the restoration image up-sampled by the operation 4005. Further, in operation 4006, the image decoding apparatus 400 also restores the first enhancement layer frequency coefficients of the third residue image by inverse quantizing the restored first enhancement layer quantization levels by using a first enhancement layer quantization parameter.

Still further in operation 4006, the image decoding apparatus 400 also restores the differences between the second enhancement layer quantization levels of the third residue image and the estimation values of the second enhancement layer quantization levels by entropy-decoding the second enhancement layer bitstream extracted in operation 4001, estimates the second enhancement layer quantization levels from the first enhancement layer quantization levels, and restores the second enhancement layer quantization levels of the third residue image by adding the restored differences to the estimation values of the second enhancement layer quantization levels. Finally, in operation 4006, the image decoding apparatus 400 also restores the second enhancement layer frequency coefficients of the third residue image by inverse quantizing the restored second enhancement layer quantization levels by using the second enhancement layer quantization parameter.

In operation 4007, the image decoding apparatus 400 restores the third residue image by transforming the first enhancement layer frequency coefficients restored in operation 4006 from a frequency domain to a color domain. In operation 4008, the image decoding apparatus 400 generates a prediction image of the second residue image from at least one of the reference image formats stored in the second buffer 422 by using motion estimation performed on the second residue image on the basis of the at least reference image. In operation 4009, the image decoding apparatus 400 restores an enhancement layer residue image by transforming the frequency coefficients of the highest enhancement layer from among the enhancement layers whose frequency coefficients correspond to the results of the IQs performed in operation 4006 from a frequency domain to a color domain.

In operation 4010, the image decoding apparatus 400 generates a restoration image of the second residue image by adding the third residue image restored in operation 4007 to the prediction image generated in operation 4008 and stores the restoration image in the second buffer 422. Further, in operation 4010, the image decoding apparatus 400 adds the enhancement layer residue image restored in operation 4009 to the restoration image, thereby generating a restoration image of the second residue image with a better quality. In operation 4011, the image decoding apparatus 400 generates a restoration image of the original image by adding the restoration image generated in operation 4010 to the restoration image up-sampled in operation 4005.

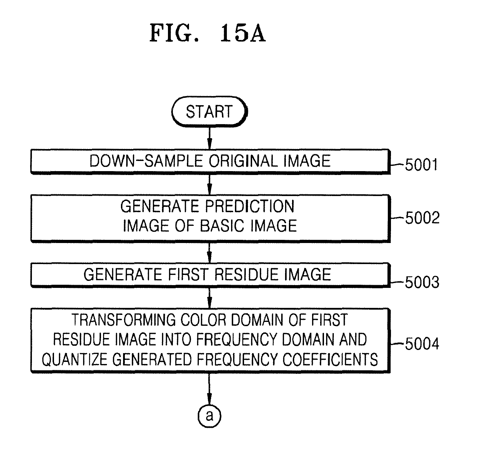

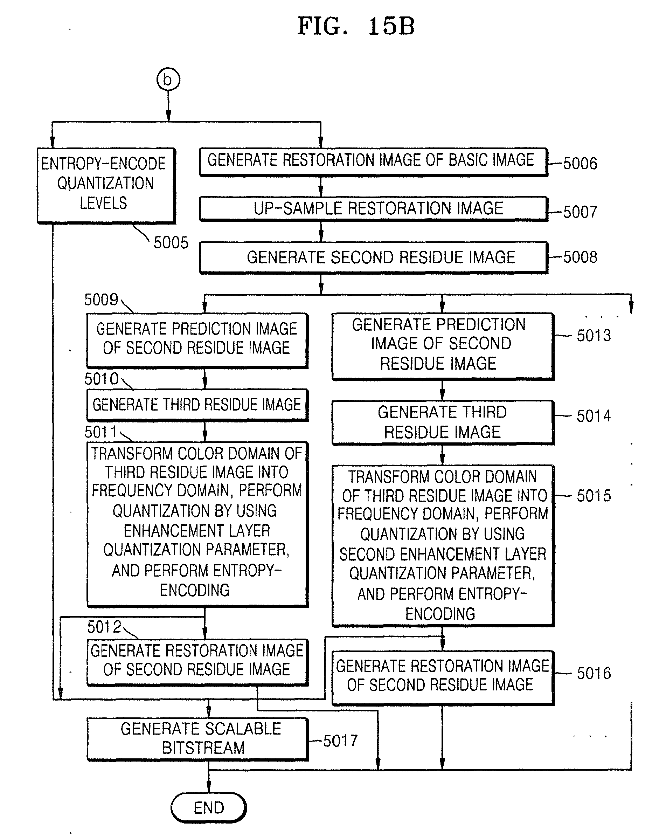

FIGS. 15A and 15B are flowcharts illustrating an image encoding method according to an embodiment of the present invention. As only one example, such an embodiment may correspond to example sequential processes performed by the example apparatus 500 illustrated in FIG. 9, but is not limited thereto and alternate embodiments are equally available. Regardless, this embodiment will now be briefly described in conjunction with FIGS. 15A and 15B, with repeated descriptions thereof being omitted. Accordingly, although not further described hereinafter, the contents described above in relation to the image encoding apparatus 500 illustrated in FIG. 9, for example, may be applied to the image encoding method according to an embodiment. In particular, only an operation of processing one of the original image formats that make up a moving picture is illustrated in order to lower the complexity of FIGS. 15A and 15B. However, the image encoding method illustrated in FIGS. 15A and 15B may be equally applied to each of the other original image formats of the moving picture.

In operation 5001, the image encoding apparatus 500 down-samples an original image currently received from among original image formats that make up a moving picture, thereby generating a basic image. In operation 5002, the image encoding apparatus 500 estimates a motion of the basic image generated by the DS 501 on the basis of at least one of reference image formats stored in the first buffer 511 and generates a prediction image of the basic image from the at least one of the reference image formats stored in the first buffer 511 by using the result of the motion estimation performed on the basic image.

In operation 5003, the image encoding apparatus 500 subtracts the prediction image generated in operation 5002 from the basic image, thereby generating a residue image corresponding to a difference between the basic image and the prediction image (hereinafter, referred to as a first residue image). In operation 5004, the image encoding apparatus 500 generates frequency coefficients of the first residue image by transforming a color domain of the first residue image generated in operation 5003 into a frequency domain, and generates quantization levels of the first residue image by quantizing the generated frequency coefficients. In operation 5005, the image encoding apparatus 500 generates a basic layer bitstream by entropy-encoding the quantization levels generated in operation 5004.

In operation 5006, the image encoding apparatus 500 restores the frequency coefficients of the first residue image by inverse quantizing the quantization levels generated in operation 5004, restores the first residue image by transforming the frequency domain of the frequency coefficients into the color domain, generates a restoration image of the basic image by adding the restored first residue image to the prediction image generated in operation 5002, and stores the restoration image in the first buffer 511.

In operation 5007, the image encoding apparatus 500 performs up-sampling on the restoration image generated in operation 5006. In operation 5008, the image encoding apparatus 500 subtracts the restoration image up-sampled in operation 5007 from the original image that is currently received from among the original image formats that make up the moving picture, thereby generating a residue image corresponding to a difference between the original image and the restoration image up-sampled in operation 5007 (hereinafter, referred to as a second residue image).

In operation 5009, the image encoding apparatus 500 estimates a motion of the second residue image generated in operation 5008 on the basis of at least one of reference image formats stored in the second buffer 523, and generates a prediction image of the second residue image from the at least one of the reference image formats stored in the second buffer 523 by using the result of the motion estimation performed on the second residue image. In operation 5010, the image encoding apparatus 500 subtracts the prediction image generated in operation 5009 from the second residue image generated in operation 5008, thereby generating a residue image corresponding to a difference between the second residue image and the prediction image (hereinafter, referred to as a third residue image).

In operation 5011, the image encoding apparatus 500 generates frequency coefficients of the third residue image by transforming a color domain of the third residue image generated in operation 5010 into a frequency domain, generates first enhancement layer quantization levels of the third residue image by quantizing the generated frequency coefficients by using a first enhancement layer quantization parameter, and generates a first enhancement layer bitstream by entropy-encoding the first enhancement layer quantization levels.

In operation 5012, the image encoding apparatus 500 restores the first enhancement layer frequency coefficients of the third residue image by inverse quantizing the first enhancement layer quantization levels generated in operation 5011, restores the third residue image by transforming the frequency domain of the restored first enhancement layer frequency coefficients into the color domain, generates a restoration image of the second residue image by adding the restored third residue image to the prediction image generated in operation 5009, and stores the restoration image in the second buffer 523.

In operation 5013, the image encoding apparatus 500 estimates a motion of the second residue image generated by the second subtractor 513 on the basis of at least one of reference image formats stored in the third buffer 535, and generates a prediction image of the second residue image from the at least one of the reference image formats stored in the third buffer 535 by using the result of the motion estimation performed on the second residue image. In operation 5014, the image encoding apparatus 500 subtracts the prediction image generated in operation 5013 from the second residue image generated in operation 5008, thereby generating a third residue image.

In operation 5015, the image encoding apparatus 500 generates frequency coefficients of the third residue image by transforming a color domain of the third residue image generated in operation 5014 into a frequency domain, and generates second enhancement layer quantization levels of the third residue image by quantizing the generated frequency coefficients by using a second enhancement layer quantization parameter. Further, in operation 5015, the image encoding apparatus 500 estimates second enhancement layer quantization levels that are to be generated by the second enhancement layer Q 531, from the first enhancement layer quantization levels, and generates a second enhancement layer bitstream by entropy-encoding generating differences between the second enhancement layer quantization levels and the estimation values of the second enhancement layer quantization levels.

In operation 5016, the image encoding apparatus 500 restores the second enhancement layer frequency coefficients of the third residue image by inverse quantizing the first enhancement layer quantization levels generated in operation 5015, restores the third residue image by transforming the frequency domain of the second enhancement layer frequency coefficients into the color domain, generates a restoration image of the second residue image by adding the restored third residue image to the prediction image generated in operation 5013, and stores the restoration image in the third buffer 535.

In operation 5017, the image encoding apparatus 500 generates a scalable bitstream by combining the basic layer bitstream generated in operation 5005 with the enhancement layer bitstreams generated in operations 5011 and 5015. In particular, operations 5009 through 5016 are repeated on all of the enhancement layers. Accordingly, in operation 5017, the image encoding apparatus 500 may combine enhancement layer bitstreams generated in operations other than operations 5011 and 5015.

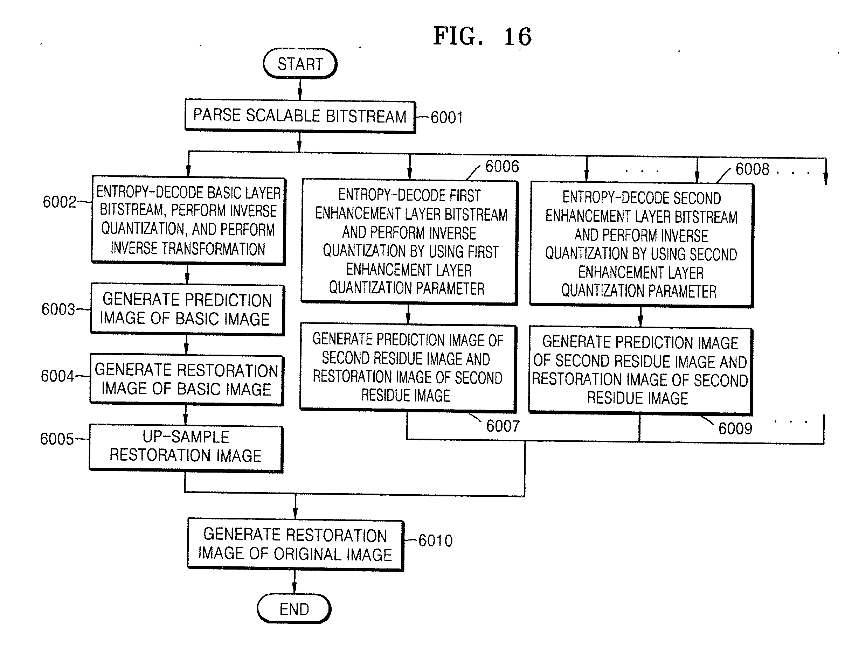

FIG. 16 is a flowchart of an image decoding method according to an embodiment of the present invention. As only one example, such an embodiment may correspond to example sequential processes performed by the example apparatus 600 illustrated in FIG. 10, but is not limited thereto and alternate embodiments are equally available. Regardless, this embodiment will now be briefly described in conjunction with FIG. 16, with repeated descriptions thereof being omitted. Accordingly, although not further described hereinafter, the contents described above in relation to the image decoding apparatus 600 illustrated in FIG. 10, for example, may be applied to the image decoding method according to an embodiment. In particular, only an operation of processing one of the original image formats that make up a moving picture is illustrated in order to lower the complexity of FIG. 16. However, the image decoding method illustrated in FIG. 16 is equally applied to each of the other original image formats of the moving picture.

In operation 6001, the image decoding apparatus 600 parses the scalable bitstream received from the image encoding apparatus 500 illustrated in FIG. 9, thereby extracting the basic layer bitstream and the enhancement layer bitstreams from the scalable bitstream. In operation 6002, the image decoding apparatus 600 entropy-decodes the basic layer bitstream extracted in operation 6001 so as to restore the quantization levels of the residual image corresponding to the difference between the basic image and the prediction image (hereinafter, referred to as the first residue image), information for image decoding, and other information, restores the frequency coefficients of the first residue image by inverse quantizing the quantization levels, and restores the first residue image by transforming the frequency coefficients from a frequency domain to a color domain.

In operation 6003, the image decoding apparatus 600 generates a prediction image of the basic image from at least one of the reference image formats stored in the first buffer 607 by using motion estimation performed on the basic image on the basis of the at least one reference image. In operation 6004, the image decoding apparatus 600 generates a restoration image of the basic image by adding the first residue image restored in operation 6002 to the prediction image generated in operation 6003 and stores the restoration image in the first buffer 607. In operation 6005, the image decoding apparatus 600 up-samples the restoration image generated in operation 6004.

In operation 6006, the image decoding apparatus 600 entropy-decodes the first enhancement layer bitstream extracted in operation 6001, thereby restoring the first enhancement layer quantization levels of a residue image corresponding to a difference between a second residue image and the prediction image (hereinafter, referred to as a third residue image). The second residue image is a residue image corresponding to a difference between the original image and the restoration image up-sampled in the operation 6005. Further, in operation 6006, the image decoding apparatus 600 also restores the first enhancement layer frequency coefficients of the third residue image by inverse quantizing the restored first enhancement layer quantization levels by using a first enhancement layer quantization parameter, and restores the third residue image by transforming the restored first enhancement layer frequency coefficients from a frequency domain to a color domain.

In operation 6007, the image decoding apparatus 600 generates a prediction image of the second residue image from at least one of the reference image formats stored in the second buffer 614 by using motion estimation performed on the second residue image on the basis of the at least reference image, generates a restoration image of the second residue image by adding the third residue image restored in operation 6006 to the prediction image, and stores the restoration image in the second buffer 614.

In operation 6008, the image decoding apparatus 600 restores the differences between the second enhancement layer quantization levels of the third residue image and the estimation values of the second enhancement layer quantization levels by entropy-decoding the second enhancement layer bitstream extracted in operation 6001, estimates the second enhancement layer quantization levels from the first enhancement layer quantization levels, and restores the second enhancement layer quantization levels of the third residue image by adding the restored differences to the estimation values of the second enhancement layer quantization levels. In operation 6008, the image decoding apparatus 600 restores the second enhancement layer frequency coefficients of the third residue image by inverse quantizing the restored second enhancement layer quantization levels by using the second enhancement layer quantization parameter, and restores the third residue image by transforming the second enhancement layer frequency coefficients from a frequency domain to a color domain.

In operation 6009, the image decoding apparatus 600 generates a prediction image of the second residue image from at least one of the reference image formats stored in the second buffer 622 by using motion estimation performed on the second residue image on the basis of the at least reference image, generates a restoration image of the second residue image by adding the third residue image restored in operation 6003 to the prediction image, and stores the restoration image in the second buffer 622.

In operation 6010, the image decoding apparatus 600 generates a restoration image of the original image by adding a restoration image of a higher enhancement layer from among the restoration image generated in operation 6007 and the restoration image generated in operation 6009, to the restoration image up-sampled in operation 6005. That is, the image decoding apparatus 600 adds the restoration image generated in operation 6009 to the restoration image up-sampled in operation 6005.

In addition to the above described embodiments, embodiments of the present invention can also be implemented through computer readable code/instructions in/on a medium, e.g., a computer readable medium, to control at least one processing element to implement any above described embodiment. The medium can correspond to any medium/media permitting the storing and/or transmission of the computer readable code.

The computer readable code can be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), for example. Thus, the medium may be such a defined and measurable structure carrying out or controlling a signal or information, such as a device carrying a bitstream, for example, according to embodiments of the present invention. The media may also be a distributed network, so that the computer readable code is stored/transferred and executed in a distributed fashion. Still further, as only an example, the processing element could include a processor or a computer processor, and processing elements may be distributed and/or included in a single device.

While aspects of the present invention have been particularly shown and described with reference to differing embodiments thereof, it should be understood that these exemplary embodiments should be considered in a descriptive sense only and not for purposes of limitation. Descriptions of features or aspects within each embodiment should typically be considered as available for other similar features or aspects in the remaining embodiments.

Thus, although a few embodiments have been shown and described, it would be appreciated by those skilled in the art that changes may be made in these embodiments without departing from the principles and spirit of the invention, the scope of which is defined in the claims and their equivalents.

**Claims**

1. An image encoding method comprising:

   generating a basic image by down-sampling an original image;
   generating a basic layer bitstream by encoding the basic image;
   generating a restoration image of the basic image;
   up-sampling the restoration image; and
   generating enhancement layer bitstreams by encoding a residue image corresponding to a difference between the original image and the up-sampled restoration image by using different quantization parameters.

2. The image encoding method of claim 1, wherein the generating of the enhancement layer bitstreams comprises:

   generating a first enhancement layer bitstream, of the enhancement layer bitstreams, by encoding the residue image by using a quantization step size or a quantization matrix of a first enhancement layer; and
   generating a second enhancement layer bitstream, of the enhancement layer bitstreams, by encoding the residue image by using a quantization step size of a second enhancement layer smaller than the quantization step size or different from the quantization matrix of the first enhancement layer.

3. The image encoding method of claim 1, wherein the generating of the enhancement layer bitstreams comprises:

   generating a first enhancement layer bitstream, of the enhancement layer bitstreams, by encoding the residue image by using a product or a sum of a first quantization step size and first quantization matrix of a first enhancement layer; and
   generating a second enhancement layer bitstream, of the enhancement layer bitstreams, by encoding the residue image by using a product or a sum of a second quantization step size and second quantization matrix of a second enhancement layer.

4. The image encoding method of claim 1, wherein the generating of the enhancement layer bitstreams comprises:

   generating frequency coefficients of the residue image by transforming the residue image;
   generating first enhancement layer quantization levels by quantizing the frequency coefficients by using a first enhancement layer quantization parameter;
   generating second enhancement layer quantization levels by quantizing the frequency coefficients by using a second enhancement layer quantization parameter;
   estimating the second enhancement layer quantization levels from the first enhancement layer quantization levels; and
   entropy-encoding differences between the second enhancement layer quantization levels and the estimated second enhancement layer quantization levels.

5. The image encoding method of claim 4, wherein the estimating of the second enhancement layer quantization levels comprises:

   restoring the frequency coefficients by inverse quantizing the first enhancement layer quantization levels; and
   estimating the second enhancement layer quantization levels by quantizing the restored frequency coefficients by using the second enhancement layer quantization parameter.

6. An image decoding method comprising:

   generating a restoration image of a basic image by decoding a basic layer bitstream;
   up-sampling the restoration image;
   restoring a residue image corresponding to a difference between an original image and the up-sampled restoration image by decoding enhancement layer bitstreams by using different quantization parameters; and
   generating a restoration image of the original image by adding the restored residue image to the up-sampled restoration image.

7. The image decoding method of claim 6, wherein the restoring of the residue image comprises generating an enhancement layer residue image format by decoding a first enhancement layer bitstream, of the enhancement layer bitstreams, by using a quantization step size of a first enhancement layer and by decoding a second enhancement layer bitstream, of the enhancement layer bitstreams, by using a quantization step size of a second enhancement layer smaller than the quantization step size of the first enhancement layer.

**8.** The image decoding method of claim 6, wherein the restoring of the residue image comprises generating the enhancement layer residue image format by decoding a first enhancement layer bitstream, of the enhancement layer bitstreams, by using a quantization matrix of a first enhancement layer and by decoding a second enhancement layer bitstream, of the enhancement layer bitstreams, by using a quantization matrix of a second enhancement layer different from the quantization matrix of the first enhancement layer.

**9.** The image decoding method of claim 7, wherein the restoring of the residue image comprises generating the enhancement layer residue image format by decoding a first enhancement layer bitstream, of the enhancement layer bitstreams, by using a product of a quantization step size and a quantization matrix of a first enhancement layer and by decoding a second enhancement layer bitstream, of the enhancement layer bitstreams, by using a product of a quantization step size and a quantization matrix of the second enhancement layer.

**10.** The image decoding method of claim 6, wherein the restoring of the residue image comprises generating the enhancement layer residue image format by decoding a first enhancement layer bitstream, of the enhancement layer bitstreams, by using a sum of a quantization step size and a quantization matrix of the first enhancement layer and by decoding a second enhancement layer bitstream of the enhancement layer bitstreams by using a sum of a quantization step size and a quantization matrix of a second enhancement layer.

**11.** The image decoding method of claim 6, wherein the restoring of the residue image comprises:

restoring first enhancement layer quantization levels by entropy-decoding a first enhancement layer bitstream, of the enhancement layer bitstreams;
restoring differences between second enhancement layer quantization levels and estimation values of the second enhancement layer quantization levels by entropy-decoding a second enhancement layer bitstream, of the enhancement layer bitstreams;
estimating the second enhancement layer quantization levels from the restored first enhancement layer quantization levels;
restoring the second enhancement layer quantization levels by adding the restored differences to the estimated second enhancement layer quantization levels; and
generating the residue image by decoding the restored second enhancement layer quantization levels by using a second enhancement layer quantization parameter.

**12.** The image decoding method of claim 11, wherein the estimating of the second enhancement layer quantization levels comprises:

restoring first enhancement layer frequency coefficients by inverse quantizing the restored first enhancement layer quantization levels by using a first enhancement layer quantization parameter; and
estimating the second enhancement layer quantization levels by quantizing the first enhancement layer frequency coefficients by using a second enhancement layer quantization parameter.

**13.** An image encoding method comprising:

generating a basic image by down-sampling an original image;
generating a basic layer bitstream by encoding the basic image;
generating a restoration image of the basic image;
up-sampling the restoration image;
generating a prediction image of a residue image corresponding to a difference between the original image and the up-sampled restoration image; and
generating enhancement layer bitstreams by encoding a residue image corresponding to a difference between the residue image and the prediction image by using different quantization parameters.

**14.** An image decoding method comprising:

generating a restoration image of a basic image by decoding a basic layer bitstream;

up-sampling the restoration image;

generating a prediction image of a residue image corresponding to a difference between an original image and the up-sampled restoration image;

restoring a residue image format corresponding to a difference between the residue image and the prediction image by decoding enhancement layer bitstreams by using different quantization parameters;

restoring the residue image between the original image and the up-sampled restoration image by adding the restored residue image format to the prediction image; and

generating a restoration image of the original image by adding the restored residue image to the up-sampled restoration image.

15. An image decoding method comprising:

generating a restoration image of a basic image by decoding a basic layer bitstream;

up-sampling the restoration image;

generating a first prediction image of a first residue image corresponding to a difference between an original image and the up-sampled restoration image;

restoring a second residue image corresponding to a difference between the first residue image and the first prediction image by decoding a first enhancement layer bitstream by using a first quantization parameter;

generating a first restoration image of the first residue image by adding the restored second residue image to the generated first prediction image;

generating a second prediction image of the first residue image;

restoring a third residue image between the first residue image and the second prediction image by decoding a second enhancement layer bitstream by using a second quantization parameter;

generating a second restoration image of the first residue image by adding the restored third residue image to the generated second prediction image; and

generating a restoration image of the original image by adding at least one of the first and second restoration images to the up-sampled restoration image.

# FIG. 1

# FIG. 2

# FIG. 3

Median/Fine Grain Scalability

| enhancement layer 1 | enhancement layer 2 | enhancement layer 3 | . . . | enhancement layer N |

Coarse Grain Scalability

Base Layer

FIG. 4

EP 2 068 567 A2

FIG. 5

$$
\begin{bmatrix}
3\ 5\ 7\ 9\ .\ . & \\
3\ 5\ 7\ .\ . & \\
7\ 9\ .\ . & \\
9\ .\ . & . \\
.\ . & .\ 29 \\
. & .\ 29\ 31
\end{bmatrix}
\Longrightarrow
\begin{bmatrix}
1\ 3\ 5\ 7\ .\ . & \\
3\ 5\ 7\ .\ . & \\
5\ 7\ .\ . & \\
7\ .\ . & . \\
.\ . & .\ 29 \\
. & .\ 29\ 31
\end{bmatrix}
$$

<LOWER LAYER>                    <UPPER LAYER>

## FIG. 6

EP 2 068 567 A2

# FIG. 7

BITSTREAM

RESTORATION IMAGE

EP 2 068 567 A2

32

FIG. 8

FIG. 9

FIG. 10

EP 2 068 567 A2

## FIG. 11

```
                    ( START )
                        │
                        ▼
        ┌───────────────────────────────────┐
        │   DOWN-SAMPLE ORIGINAL IMAGE      │──1001
        └───────────────────────────────────┘
                        │
                        ▼
        ┌───────────────────────────────────┐
        │   GENERATE PREDICTION IMAGE        │──1002
        │      OF BASIC IMAGE                │
        └───────────────────────────────────┘
                        │
                        ▼
        ┌───────────────────────────────────┐
        │   GENERATE FIRST RESIDUE IMAGE     │──1003
        └───────────────────────────────────┘
                        │
                        ▼
        ┌───────────────────────────────────┐
        │  TRANSFORM COLOR DOMAIN OF FIRST   │──1004
        │  RESIDUE IMAGE INTO FREQUENCY      │
        │  DOMAIN AND QUANTIZE GENERATED     │
        │  FREQUENCY COEFFICIENTS            │
        └───────────────────────────────────┘
```

1005 — ENTROPY-ENCODE QUANTIZATION LEVELS

1006 — GENERATE RESTORATION IMAGE OF BASIC IMAGE

1007 — UP-SAMPLE RESTORATION IMAGE

1008 — GENERATE SECOND RESIDUE IMAGE

1009 — TRANSFORM SECOND RESIDUE IMAGE FROM COLOR DOMAIN TO FREQUENCY DOMAIN

1010 — PERFORM QUANTIZATION BY USING DIFFERENT QUANTIZATION PARAMETERS AND PERFORM ENTROPY-ENCODING

1011 — GENERATE SCALABLE BITSTREAM

( END )

## FIG. 12

START

PARSE SCALABLE BITSTREAM — 2001

2002 — ENTROPY-DECODE BASIC LAYER BITSTREAM, INVERSELY QUANTIZE QUANTIZATION LEVELS, AND INVERSELY TRANSFORM FREQUENCY COEFFICIENTS FROM FREQUENCY DOMAIN TO COLOR DOMAIN

PERFORM ENTROPY-DECODE AND PERFORM INVERSE QUANTIZATION BY USING DIFFERENT QUANTIZATION PARAMETERS — 2006

2003 — GENERATE PREDICTION IMAGE OF BASIC IMAGE

PERFORM INVERSE TRANSFORMATION — 2007

2004 — GENERATE RESTORATION IMAGE OF BASIC IMAGE

2005 — UP-SAMPLE RESTORATION IMAGE

GENERATE RESTORATION IMAGE OF ORIGINAL IMAGE — 2008

END

FIG. 13

```
                    ( START )
                        │
                        ▼
        ┌──────────────────────────────┐
        │  DOWN-SAMPLE ORIGINAL IMAGE   │──3001
        └──────────────────────────────┘
                        │
                        ▼
        ┌──────────────────────────────┐
        │   GENERATE PREDICTION IMAGE    │──3002
        │       OF BASIC IMAGE           │
        └──────────────────────────────┘
                        │
                        ▼
        ┌──────────────────────────────┐
        │  GENERATE FIRST RESIDUE IMAGE  │──3003
        └──────────────────────────────┘
                        │
                        ▼
   ┌────────────────────────────────────────┐
   │ TRANSFORM COLOR DOMAIN OF FIRST RESIDUE │
   │ IMAGE INTO FREQUENCY DOMAIN AND QUANTIZE │──3004
   │   GENERATED FREQUENCY COEFFICIENTS       │
   └────────────────────────────────────────┘
```

3005 — ENTROPY-ENCODE QUANTIZATION LEVELS

3006 — GENERATE RESTORATION IMAGE OF BASIC IMAGE

3007 — UP-SAMPLE RESTORATION IMAGE

3008 — GENERATE SECOND RESIDUE IMAGE

3009 — GENERATE PREDICTION IMAGE OF SECOND RESIDUE IMAGE

3010 — GENERATE THIRD RESIDUE IMAGE

3011 — TRANSFORMING COLOR DOMAIN OF THIRD RESIDUE IMAGE INTO FREQUENCY DOMAIN

3012 — PERFORM QUANTIZATION BY USING DIFFERENT QUANTIZATION PARAMETERS AND PERFORM ENTROPY-ENCODING

3014 — GENERATE SCALABLE BITSTREAM

3013 — GENERATE RESTORATION IMAGE OF SECOND RESIDUE IMAGE

( END )

# FIG. 14

```
( START )
      │
      ▼
┌──────────────────────────┐
│ PARSE SCALABLE BITSTREAM │──4001
└──────────────────────────┘
      │
  ┌───┴────────────────────────────────┐
  ▼                                     ▼
```

┌─────────────────────────────┐   ┌──────────────────────────────┐
│ ENTROPY-DECODE BASIC LAYER  │   │ PERFORM ENTROPY-DECODING AND │  4006
│ BITSTREAM, INVERSELY QUANTIZE│  │ PERFORM INVERSE QUANTIZATION │
│ QUANTIZATION LEVELS, AND    │   │ BY USING DIFFERENT QUANTIZATION│
│ INVERSELY TRANSFORM FREQUENCY│  │ PARAMETERS                   │
│ COEFFICIENTS FROM FREQUENCY │   └──────────────────────────────┘
│ DOMAIN TO COLOR DOMAIN      │      (4002)
└─────────────────────────────┘

4007                                          4009

┌─────────────────────┐   ┌──────────────────────┐
│ TRANSFORM FIRST     │   │ INVERSELY TRANSFORM  │
│ ENHANCEMENT         │   │ FREQUENCY            │
│ LAYER FREQUENCY     │   │ COEFFICIENTS OF      │
│ COEFFICIENTS FROM   │   │ HIGHEST              │
│ FREQUENCY DOMAIN    │   │ ENHANCEMENT LAYER    │
│ TO COLOR DOMAIN     │   └──────────────────────┘
└─────────────────────┘

┌──────────────────────┐
│ GENERATE PREDICTION  │──4003
│ IMAGE OF BASIC IMAGE │
└──────────────────────┘

┌──────────────────────┐
│ GENERATE RESTORATION │──4004
│ IMAGE OF BASIC IMAGE │
└──────────────────────┘

┌────────────────────────┐
│ UP-SAMPLE RESTORATION IMAGE │──4005
└────────────────────────┘

┌──────────────────────┐
│ GENERATE             │
│ PREDICTION IMAGE     │──4008
│ OF SECOND            │
│ RESIDUE IMAGE        │
└──────────────────────┘

┌────────────────────────────────┐
│ GENERATE RESTORATION IMAGE     │──4010
│ OF SECOND RESIDUE IMAGE        │
└────────────────────────────────┘

┌──────────────────────┐
│ GENERATE RESTORATION │──4011
│ IMAGE OF ORIGINAL IMAGE │
└──────────────────────┘
      │
      ▼
   ( END )

# FIG. 15A

```
                    ( START )
                        │
                        ▼
    ┌──────────────────────────────────────┐
    │     DOWN-SAMPLE ORIGINAL IMAGE        │──5001
    └──────────────────────────────────────┘
                        │
                        ▼
    ┌──────────────────────────────────────┐
    │          GENERATE PREDICTION          │──5002
    │         IMAGE OF BASIC IMAGE          │
    └──────────────────────────────────────┘
                        │
                        ▼
    ┌──────────────────────────────────────┐
    │      GENERATE FIRST RESIDUE IMAGE     │──5003
    └──────────────────────────────────────┘
                        │
                        ▼
    ┌──────────────────────────────────────┐
    │  TRANSFORMING COLOR DOMAIN OF FIRST   │
    │ RESIDUE IMAGE INTO FREQUENCY DOMAIN AND│──5004
    │ QUANTIZE GENERATED FREQUENCY COEFFICIENTS│
    └──────────────────────────────────────┘
                        │
                        ▼
                      ( a )
```

# FIG. 15B

(b)

ENTROPY-ENCODE QUANTIZATION LEVELS —5005

GENERATE RESTORATION IMAGE OF BASIC IMAGE —5006

UP-SAMPLE RESTORATION IMAGE —5007

GENERATE SECOND RESIDUE IMAGE —5008

5009 GENERATE PREDICTION IMAGE OF SECOND RESIDUE IMAGE

GENERATE PREDICTION IMAGE OF SECOND RESIDUE IMAGE — 5013

5010 GENERATE THIRD RESIDUE IMAGE

GENERATE THIRD RESIDUE IMAGE — 5014

5011 TRANSFORM COLOR DOMAIN OF THIRD RESIDUE IMAGE INTO FREQUENCY DOMAIN, PERFORM QUANTIZATION BY USING ENHANCEMENT LAYER QUANTIZATION PARAMETER, AND PERFORM ENTROPY-ENCODING

TRANSFORM COLOR DOMAIN OF THIRD RESIDUE IMAGE INTO FREQUENCY DOMAIN, PERFORM QUANTIZATION BY USING SECOND ENHANCEMENT LAYER QUANTIZATION PARAMETER, AND PERFORM ENTROPY-ENCODING — 5015

5012 GENERATE RESTORATION IMAGE OF SECOND RESIDUE IMAGE

GENERATE RESTORATION IMAGE OF SECOND RESIDUE IMAGE — 5016

GENERATE SCALABLE BITSTREAM —5017

END

## FIG. 16

START

PARSE SCALABLE BITSTREAM —6001

ENTROPY-DECODE BASIC LAYER BITSTREAM, PERFORM INVERSE QUANTIZATION, AND PERFORM INVERSE TRANSFORMATION  6002

ENTROPY-DECODE FIRST ENHANCEMENT LAYER BITSTREAM AND PERFORM INVERSE QUANTIZATION BY USING FIRST ENHANCEMENT LAYER QUANTIZATION PARAMETER  6006

ENTROPY-DECODE SECOND ENHANCEMENT LAYER BITSTREAM AND PERFORM INVERSE QUANTIZATION BY USING SECOND ENHANCEMENT LAYER QUANTIZATION PARAMETER  6008 . . .

GENERATE PREDICTION IMAGE OF BASIC IMAGE  6003

GENERATE RESTORATION IMAGE OF BASIC IMAGE  6004

UP-SAMPLE RESTORATION IMAGE  6005

GENERATE PREDICTION IMAGE OF SECOND RESIDUE IMAGE AND RESTORATION IMAGE OF SECOND RESIDUE IMAGE  6007

GENERATE PREDICTION IMAGE OF SECOND RESIDUE IMAGE AND RESTORATION IMAGE OF SECOND RESIDUE IMAGE  6009 . . .

GENERATE RESTORATION IMAGE OF ORIGINAL IMAGE —6010

END

EP 2 068 567 A2